# EUROPEAN PATENT SPECIFICATION

(11) **EP 4 268 502 B1**
(45) Date of publication and mention of the grant of the patent: **05.11.2025**
(21) Application number: 21844076.6
(22) Date of filing: 21.12.2021
(51) Int. Cl.: H04W 24/10, H04W 24/02, H04W 8/08

(54) **MOBILITY HISTORY INFORMATION ENHANCEMENTS WITH PUBLIC LAND MOBILE NETWORK (PLMN) IDENTITY**
VERBESSERUNGEN AN MOBILITÄTSVERLAUFSINFORMATIONEN MIT IDENTITÄT EINES ÖFFENTLICHEN LANDMOBILNETZES (PLMN)
AMÉLIORATIONS D'INFORMATIONS D'HISTORIQUE DE MOBILITÉ AVEC IDENTITÉ DE RÉSEAU DE TÉLÉPHONIE MOBILE TERRESTRE PUBLIC (PLMN)

(30) Priority: 23.12.2020 US 202063130208 P
(43) Date of publication of application: 01.11.2023
(73) Proprietor: Telefonaktiebolaget LM Ericsson (publ), 164 83 Stockholm (SE)
(72) Inventor: PARICHEHREHTEROUJENI, Ali, 583 34 Linköping (SE); RAMACHANDRA, Pradeepa, 589 29 Linköping (SE); CENTONZA, Angelo, 18720 Torrenueva Costa (ES); BELLESCHI, Marco, 171 55 Solna (SE); ZETTERBERG, Kristina, 589 39 Linköping (SE)
(74) Representative: Ericsson
(86) International application number: PCT/SE2021/051296
(87) International publication number: WO 2022/139667

(56) References cited:
- WO-A1-2019/194164
- WO-A1-2019/194164
- WO-A1-2020/095851
- WO-A1-2020/095851
- US-A1- 2018 249 361
- US-A1- 2018 249 361
- US-A1- 2019 075 613
- US-A1- 2019 075 613
- US-A1- 2021 105 605
- US-A1- 2021 105 605
- "5G; NR; Radio Resource Control (RRC); Protocol specification (3GPP TS 38.331 version 16.2.0 Release 16)", vol. 3GPP RAN, no. V16.2.0, 12 November 2020 (2020-11-12), pages 1 - 908, XP014389788, Retrieved from the Internet <URL:http://www.etsi.org/deliver/etsi_ts/138300_138399/138331/16.02.00_60/ts_138331v160200p.pdf> [retrieved on 20201112]
- "5G; NR; Radio Resource Control (RRC); Protocol specification (3GPP TS 38.331 version 16.2.0 Release 16)", vol. 3GPP RAN, no. V16.2.0, 12 November 2020 (2020-11-12), pages 1 - 908, XP014389788, Retrieved from the Internet <URL:http://www.etsi.org/deliver/etsi_ts/138300_138399/138331/16.02.00_60/ts_138331v160200p.pdf> [retrieved on 20201112]

## Description

### TECHNICAL FIELD

The present disclosure relates generally to communications, and more particularly to communication methods and related devices and nodes supporting wireless communications.

### BACKGROUND

Mobility history information (MHI) has been introduced in long term evolution (LTE) and has been adopted in new radio (NR) as well. The MHI measurements are accumulated by the user equipment (UE) independent of its radio resource control (RRC) state (i.e., Idle/Inactive/Connected). As part of the MHI, the UE stores the cell identifier which is the current serving cell for this UE and also stores the information related to how long the UE has stayed in this cell. The UE further keeps such a history for up to past 16 serving cells. The UE also includes information related to how long it has been out of the coverage scenario as well.

Relevant disclosures in this technical field are: WO 2020/095851 A1, US 2019/075613 A1, US 2018/249361 A1, WO 2019/194164 A1 and "5G; NR; Radio Resource Control (RRC); Protocol specification (3GPP TS 38.331 version 16.2.0 Release 16)".

The procedural text related to the UE's accumulation of the MHI information is in section 5.7.9 of the 3rd Generation Partnership Project (3GPP) TS 38.331 specification shown in the following:

### 5. 7.9 Mobility history information

### 5.7.9.1 General

This procedure specifies how the mobility history information is stored by the UE, covering RRC IDLE, RRC INACTIVE and RRC CONNECTED.

### 5.7.9.2 Initiation

If the UE supports storage of mobility history information, the UE shall:
1> Upon change of suitable cell, consisting of primary cell (PCell) in RRC_CONNECTED or serving cell in RRC_INACTIVE (for NR cell) or in RRC_IDLE (for NR or evolved-universal terrestrial radio access (E-UTRA) cell), to another NR or E-UTRA cell, or when entering any cell selection' state from 'camped normally' state in NR or LTE:
   2> include an entry in variable *VarMobilityHistoryReport* possibly after removing the oldest entry, if necessary, according to following:
      3> if the global cell identity of the previous PCell/serving cell is available:
         4> include the global cell identity of that cell in the field *visitedCellId* of the entry;
      3> else:
         4> include the physical cell identity and carrier frequency of that cell in the field *visitedCellId* of the entry;
      3> set the field *timeSpent* of the entry as the time spent in the previous PCell/serving cell;
1> upon entering camped normally state in NR (in RRC_IDLE, RRC_INACTIVE or RRC_CONNECTED) or E-UTRA (in RRC_IDLE or RRC_CONNECTED) while previously in 'any cell selection' state or 'camped on any cell' state in NR or LTE:
   2> include an entry in variable *VarMobilityHistoryReport* possibly after removing the oldest entry, if necessary, according to following:
      3> set the field *timeSpent* of the entry as the time spent in 'any cell selection' state and/or 'camped on any cell' state in NR or LTE.

The corresponding ASN.1 can be found in the IE VisitedCellInfoList in section 6.3.4 of TS 38.331. an excerpt of the spec related to the VisitedCellInfoList is shown below:

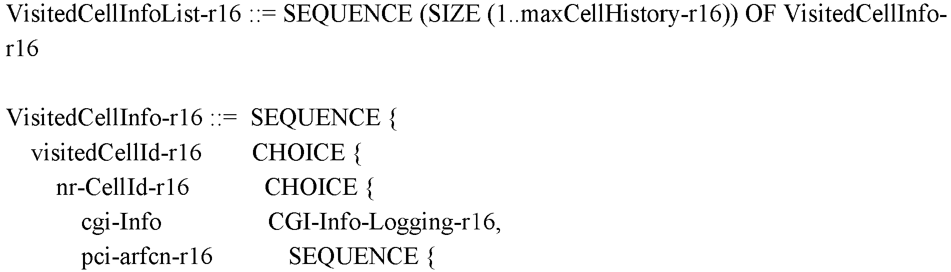

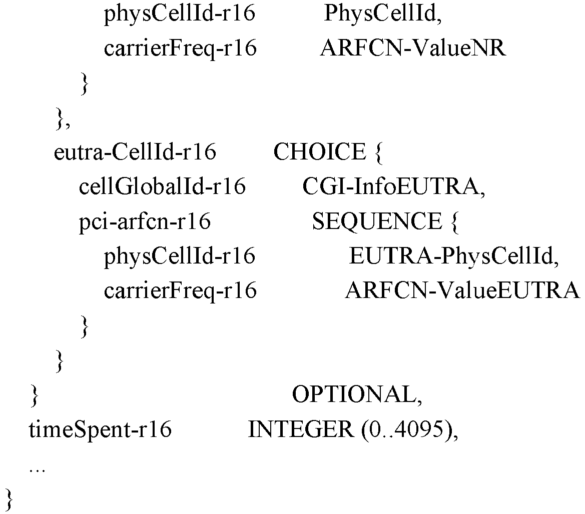

Further, the UE can indicate the availability of this mobility history via the field mobilityHistoryAvail in either RRCSetupComplete or RRCResumeComplete messages. And then the content of the mobility history information can be fetched upon request from the network as part of UE information Request/response procedure.

### SUMMARY

Problems that can occur include that the current mobility history information collects the trajectory of the UE in terms of the visited cells without any consideration on the network public land mobile network (PLMN) identity. This may lead to a situation where the UE logs its trajectory in a given PLMN associated to a given mobile operator and reports it as part of mobility history information to another PLMN associated to another mobile operator, which can provide the other mobile operator insight to approaches used by the mobile operator.

The situation may be even worse where the UEs trajectory is logged in dual connectivity scenarios i.e., the UE logs not only the PCell information from the master leg, but also the primary secondary cell (PSCell) information from a secondary leg. This can result in a mobility history information of a UE in a dual connectivity (DC) scenario in one operator is reported to the other operator. This may lead to a situation that mobility history information discloses each operator approach in setting up a DC scenario, to the other operators.

The above-stated objects are achieved with a method according to claim 1 and a corresponding wireless device according to claim 8.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a block diagram illustrating a wireless device UE according to some embodiments;
Figure 2 is a block diagram illustrating a radio access network RAN node (e.g., a base station eNB/gNB) according to some embodiments;
Figure 3 is a block diagram illustrating a core network CN node (e.g., an AMF node, an SMF node, etc.) according to some embodiments of inventive concepts;
Figures 4-18 are flow diagrams illustrating operations according to some embodiments;
Figure 19 is a block diagram of a wireless network in accordance with some embodiments;
Figure 20 is a block diagram of a user equipment in accordance with some embodiments
Figure 21 is a block diagram of a virtualization environment in accordance with some embodiments;
Figure 22 is a block diagram of a telecommunication network connected via an intermediate network to a host computer in accordance with some embodiments;
Figure 23 is a block diagram of a host computer communicating via a base station with a user equipment over a partially wireless connection in accordance with some embodiments;
Figure 24 is a block diagram of methods implemented in a communication system including a host computer, a base station and a user equipment in accordance with some embodiments;
Figure 25 is a block diagram of methods implemented in a communication system including a host computer, a base station and a user equipment in accordance with some embodiments;
Figure 26 is a block diagram of methods implemented in a communication system including a host computer, a base station and a user equipment in accordance with some embodiments; and
Figure 27 is a block diagram of methods implemented in a communication system including a host computer, a base station and a user equipment in accordance with some embodiments.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

As previously indicated, problems with existing solutions may include that the current mobility history information collects the trajectory of the UE in terms of the visited cells without any consideration on the network public land mobile network (PLMN) identity. This may lead to a situation that the UE logs its trajectory in a given PLMN associated to a given mobile operator and reports it as part of mobility history information to another PLMN associated to another mobile operator.

The situation may be even worse if the UEs trajectory is logged in dual connectivity scenarios i.e., UE logs not only the PCell information from master leg, but also the primary secondary cell (PSCell) information from a secondary leg. It may be a usual scenario that a mobility history information of a UE in a dual connectivity (DC) scenario in one operator is reported to the other operator. This may lead to a situation that mobility history information discloses each operator approach in setting up a DC scenario, to the other operators.

According to some embodiments herein, methods may be provided in which the UE considers at least one of multiple different approaches when logging the mobility history information. For example, in some embodiments, the UE may log the PLMN identity information of the visited cells as part of mobility history information. Some embodiments provide that the UE may log mobility history information per each PLMN. Namely UE may log the visited cells for one PLMN separately from another PLMN, which may result in a list of mobility history information lists. Some embodiments provide that the UE logs PLMN information beside the visited cell information in the list of visited cells. This may result in a single list of mobility history information.

In some embodiments, the UE may log the information of the cells as part of an existing mobility history information if the PLMN identity information of the visited cell is included in the PLMN identity information included in an already existing mobility history information variable. Some embodiments provide that if the registered PLMN (RPLMN) (prior to cell change) is part of the PLMN identity information stored in the UE variable varMobilityHistoryReport, then the cell is appended to the visitedCellInfoList. Otherwise, all the contents of the varMobilityHistoryReport may be removed and the cell may be included in the visitedCellInfoList.

Some embodiments provide that if the RPLMN (prior to the cell change) is part of the PLMN identity information stored in the UE variable varMobilityHistoryReport, then the cell is appended to the visitedCellInfoList. Otherwise, the previous contents of the varMobilityHistoryReport that belonged to a different PLMN may be replaced with a single entry that indicates the total time spent in that PLMN.

In some embodiments, the UE logs a dummy value for the cell information (e.g., cell ID) and the dwelling time in the cells in which their associated PLMN identity is not already in the list of PLMN identities in the mobility history information variable. As a non-limiting example, the UE can log zero as a cell Identifier if the PLMN of the visited cell is not in the list of targeted PLMNs for logging mobility history information.

In some embodiments, the UE logs the reason for a handover in case when UE moves to a cell with a different PLMN.

In some embodiments, theUE indicates the availability of the mobility history information to the network if the PLMN identity of the network is equal to one of the PLMN identity logged as part of mobility history information variable.

Some embodiments provide that the UE sends to the network only the mobility history information related to the PLMN identity information of the cell requesting the mobility history information and delete the content of the mobility history information associated to that PLMN from the VarMobilityHistoryReport.

In a DC scenario, what is logged (as mobility history information, depending on which solution is used in the embodiments disclosed above) and/or sent to the RAN nodes can be based on the master node PLMN or based on secondary node PLMN. For example, if the mobility history information of secondary nodes' PLMN associated network is not to be shared but the master node is, the UE may log that there were secondary nodes, but not which, or only share the PCell information and leave visited PSCells empty. In some embodiments, one or more visited master cells with a PLMN that is not allowed to share could be represented by one 'other PLMN' entry but still include the secondary cells visited if they are in a PLMN that is allowed to share information on. Such embodiments may be based on the assumption that there is a correlation between PSCells and PCells in the mobility history information.

In some embodiments, methods may be directed to methods in which a RAN considers one or more multiple different approaches when handling the Mobility History Information received by the UE.

In some embodiments, the Mobility History Information may be forwarded during handover signalling to a target RAN node only if the target RAN cell supports the same PLMN as the source cell.

Some embodiments provide that the Mobility History Information may be forwarded during handover signalling to a target RAN node only if the target RAN cell supports an equivalent PLMN as the source cell.

In some embodiments, the Mobility History Information may be forwarded during handover signalling to a target RAN node only if the target RAN cell belongs to a PLMN or a tracking area that has been configured at the RAN as an area within which the mobility history information can be shared by RAN nodes, or if the target cell has been deliberately configured as a cell where the Mobility History Information may be shared.

Some embodiments provide that, if the Mobility History Information provided by the UE has been collected on a per PLMN basis, the source RAN forwards to the target RAN only the UE History Information pertinent to the PLMN IDs supported by the target cells.

Advantages of embodiments disclosed herein may include that the UE reports to the network only the relevant part of the mobility history information. In this manner, the mobility history information belonging to the other networks with different PLMNs belonging to each operator would not be reported/disclosed to another network owned by different operators.

As used herein, the term cell change has been used in the following description to refer to both cell reselection and handover.

Explanations provided herein may be applicable to new radio, NR, radio access technology but the same can be used for other radio access technologies as well.

In some embodiments, the UE logs the MHI considering the PLMN identity information of the visited cells. Some embodiments provide that the UE logs one list of mobility history information per each PLMN. Namely UE logs the visited cells for each PLMN separately from the other PLMNs. This leads to a list of mobility history information lists, each associated to the PLMN associated to one each operator.

In this solution UE may include also a flag indicating that PLMN identity is changed to another PLMN. UE may also indicate the next PLMN identity i.e., the PLMN identity of the new serving cell. In addition, EU may log the previous PLMNN identity upon moving to the new PLMN and when logging a new entry in the visitedCellList for the new PLMN. A non-limiting example implementation of this approach is shown in the following:

Embodiments providing Mobility history information may specify how the mobility history information is stored by the UE, covering RRC_IDLE, RRC_INACTIVE and RRC_CONNECTED. The initiation provides that if the UE supports storage of mobility history information, the UE shall perform the following operations:
1>Upon change of suitable cell, consisting of PCell in RRC_CONNECTED or serving cell in RRC_INACTIVE (for NR cell) or in RRC_IDLE (for NR or E-UTRA cell), to another NR or E-UTRA cell, or when entering any cell selection' state from 'camped normally' state in NR or LTE:
   If the PLMN identity of the previous cell is not included in VarMobilityHistoryInfo
   Create a new VisitedCellInfoList associated to the PLMN identity of the previous cell and set the PLMN-identity of the new list to the PLMN identity of the previous cell
   2>If the PLMN identity of the previous cell is included in VarMobilityHistoryInfo and there exist a list of VisitedCellInfoList for that PLMN identity
   2> include an entry in variable VarMobilityHistoryReport in the list of VisitedCellInfoList possibly after removing the oldest entry, if necessary, according to following:
      3>if the global cell identity of the previous PCell/serving cell is available:
         4> include the global cell identity of that cell in the field visitedCellId of the entry;
      3>else:
         4> include the physical cell identity and carrier frequency of that cell in the field visitedCellId of the entry;
      3> set the field timeSpent of the entry as the time spent in the previous PCell/serving cell;
   2> upon change of the PLMN of the current cell compared to the PLMN identity of the previous cell
      3> set the another_PLMN to true
      3> set the next_PLMN_Identity to the PLMN-identity of the PLMN identity of the new serving cell
1> upon entering camped normally state in NR (in RRC_IDLE, RRC_INACTIVE or RRC_CONNECTED) or E-UTRA (in RRC_IDLE or RRC_CONNECTED) while previously in 'any cell selection' state or 'camped on any cell' state in NR or LTE:
   2> include an entry in variable VarMobilityHistoryReport possibly after removing the oldest entry, if necessary, according to following:
      3> set the field timeSpent of the entry as the time spent in 'any cell selection' state and/or 'camped on any cell' state in NR or LTE.

Reference is now made to the programming code illustrated below for VarMobilityHistoryReport UE variable according to some embodiments:

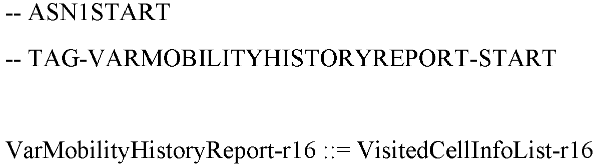

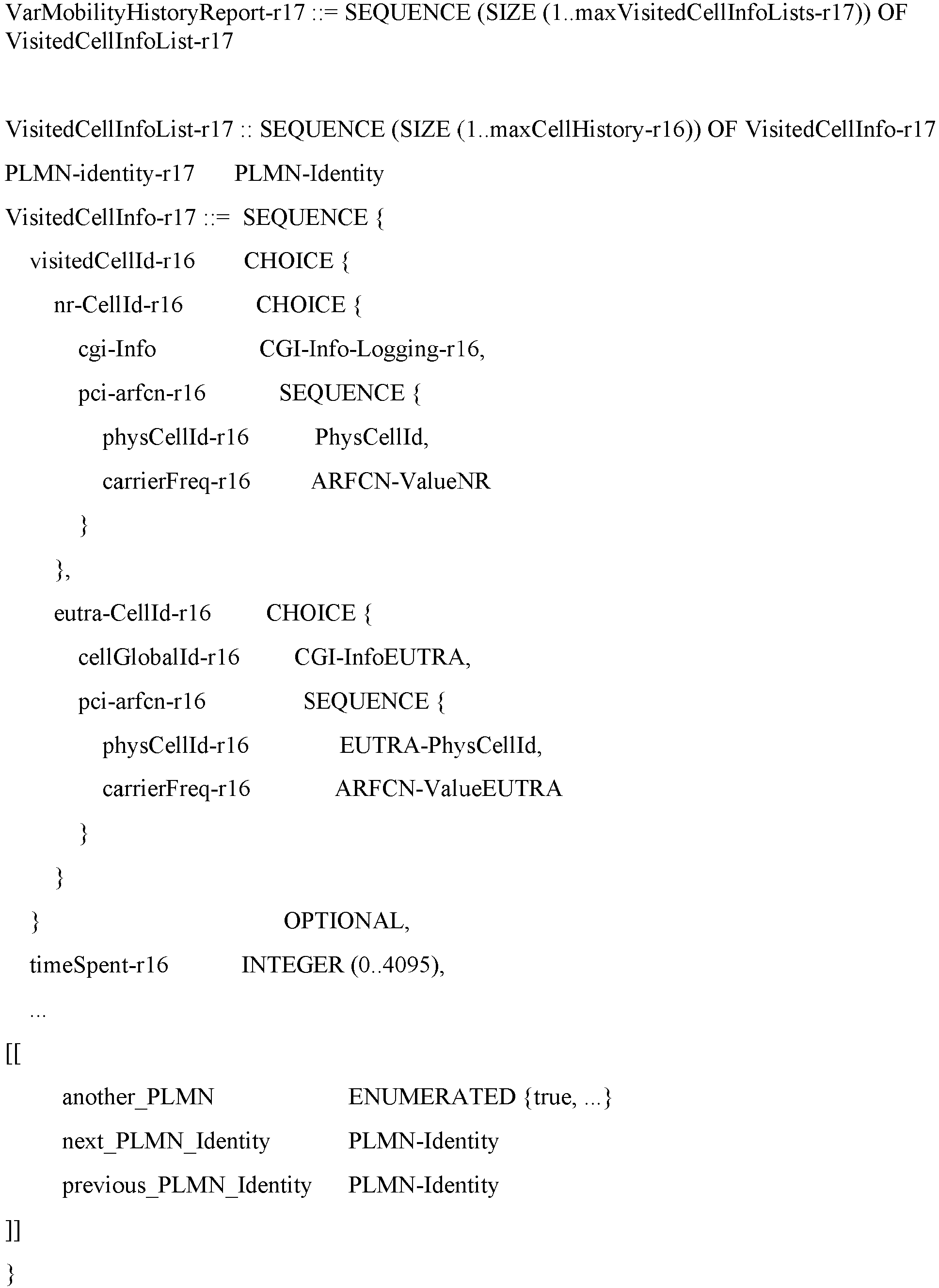

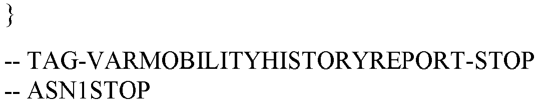

In some embodiments, the UE logs PLMN information beside the visited cell information in the list of visited cells. This leads to one list of mobility history information. In this solution, UE logs the PLMN identity of the previous serving cell as part of the visited cell info list as part of mobility history information info. A non-limiting example implementation of this solution is shown in the following.

Embodiments herein specify how the mobility history information is stored by the UE, covering RRC_IDLE, RRC_INACTIVE and RRC_CONNECTED.

During initiation, if the UE supports storage of mobility history information, the UE shall:
1> Upon change of suitable cell, consisting of PCell in RRC_CONNECTED or serving cell in RRC_INACTIVE (for NR cell) or in RRC_IDLE (for NR or E-UTRA cell), to another NR or E-UTRA cell, or when entering any cell selection' state from 'camped normally' state in NR or LTE:
   2> include an entry in variable VarMobilityHistoryReport possibly after removing the oldest entry, if necessary, according to following:
      3> include the PLMN identity of the previous cell in the field plmn-Identity of the entry;
      3> if the global cell identity of the previous PCell/serving cell is available:
         4> include the global cell identity of that cell in the field visitedCellId of the entry;
      3> else:
         4> include the physical cell identity and carrier frequency of that cell in the field visitedCellId of the entry;
      3> set the field timeSpent of the entry as the time spent in the previous PCell/serving cell;
1> upon entering camped normally state in NR (in RRC_IDLE, RRC_INACTIVE or RRC_CONNECTED) or E-UTRA (in RRC_IDLE or RRC_CONNECTED) while previously in 'any cell selection' state or 'camped on any cell' state in NR or LTE:
   2> include an entry in variable VarMobilityHistoryReport possibly after removing the oldest entry, if necessary, according to following:
      3> set the field timeSpent of the entry as the time spent in 'any cell selection' state and/or 'camped on any cell' state in NR or LTE.

A corresponding non-limiting example of ASN.1 covering such embodiments is provided below. The UE removes the logs associated to previous PLMN related cells' MHI upon changing the PLMN (at the time of logging MHI).

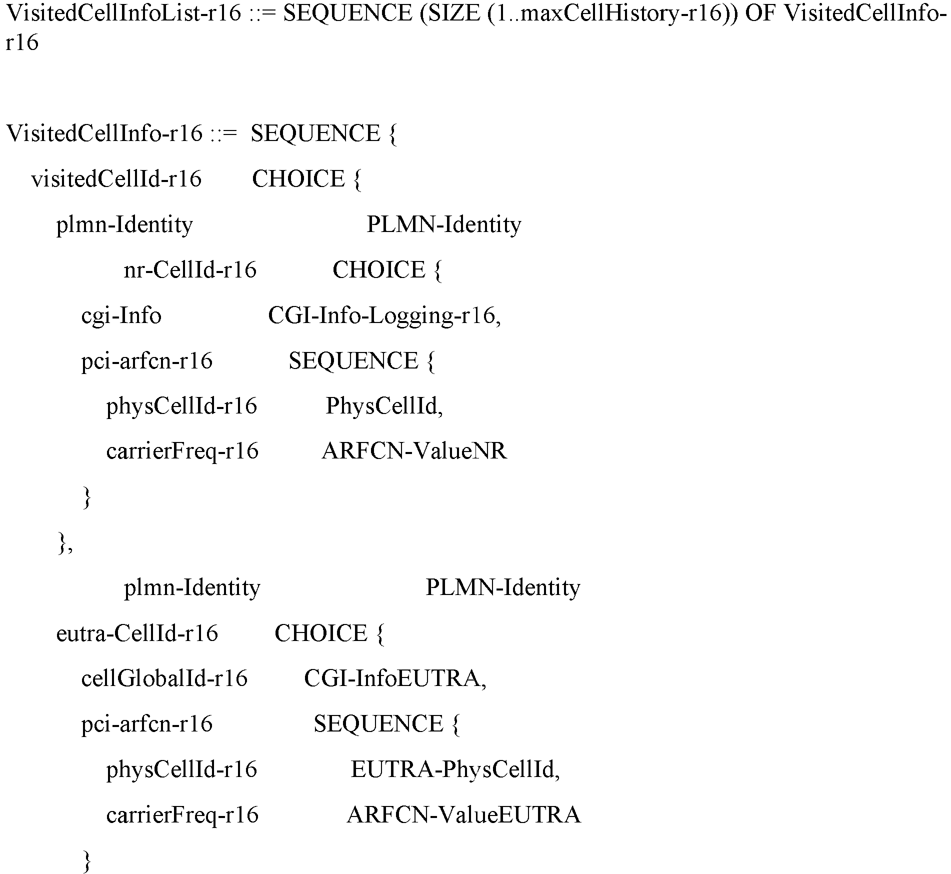

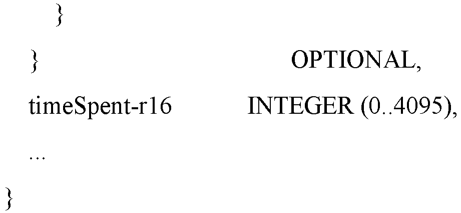

If the RPLMN (prior to cell change) is part of the PLMN identity information stored in the UE variable varMobilityHistoryReport, then the cell may be appended to the visitedCellInfoList; otherwise, all contents of the varMobilityHistoryReport may be removed and the cell may be included in the visitedCellInfoList.

In some embodiments, the UE stores a PLMN list in the varMobilityHistoryReport. This list may include a list of equivalent PLMNs that are part of the MHI. The UE keeps appending to this list as long as the RPLMN in that cell is part of the already existing PLMN list in varMobilityHistoryReport. If the RPLMN is not in the PLMN list of varMobilityHistoryReport, then the UE deletes all the entries that are already stored in the varMobilityHistoryReport. An example implementation follows in which the procedure specifies how the mobility history information is stored by the UE, covering RRC_IDLE, RRC_INACTIVE and RRC_CONNECTED.

If the UE supports storage of mobility history information, the UE shall:
1> Upon change of suitable cell, consisting of PCell in RRC_CONNECTED or serving cell in RRC_INACTIVE (for NR cell) or in RRC_IDLE (for NR or E-UTRA cell), to another NR or E-UTRA cell, or when entering any cell selection' state from 'camped normally' state in NR or LTE:
   2> if the RPLMN while being in previous PCell/serving cell is included in plmn-IdentityList stored in VarMobilityHistoryReport;
      3> set the plmn-IdentityList in VarMobilityHistoryReport to include the list of EPLMNs stored by the UE (i.e. includes the RPLMN) in previous PCell/serving cell without exceeding the limit of maxPLMN;
         4> include an entry in variable VarMobilityHistoryReport possibly after removing the oldest entry, if necessary, according to following:
            5> if the global cell identity of the previous PCell/serving cell is available:
               6> include the global cell identity of that cell in the field visitedCellId of the entry;
         4> else:
            5> include the physical cell identity and carrier frequency of that cell in the field visitedCellId of the entry;
         4> set the field timeSpent of the entry as the time spent in the previous PCell/serving cell;
   2> else;
      3> remove all the entries from the VarMobilityHistoryReport:
      3> set the plmn-IdentityList in VarMobilityHistoryReport to the list of EPLMNs stored by the UE in the previous PCell/serving cell (i.e. includes the RPLMN);
      3> include an entry in variable VarMobilityHistoryReport according to following:
         4> if the global cell identity of the previous PCell/serving cell is available:
            5> include the global cell identity of that cell in the field visitedCellId of the entry;
         4> else:
            5> include the physical cell identity and carrier frequency of that cell in the field visitedCellId of the entry;
         4> set the field timeSpent of the entry as the time spent in the previous PCell/serving cell;
            7> upon entering camped normally state in NR (in RRC_IDLE, RRC_INACTIVE or RRC_CONNECTED) or E-UTRA (in RRC_IDLE or RRC_CONNECTED) while previously in 'any cell selection' state or 'camped on any cell' state in NR or LTE:
               8> include an entry in variable VarMobilityHistoryReport possibly after removing the oldest entry, if necessary, according to following:
                  9> set the field timeSpent of the entry as the time spent in 'any cell selection' state and/or 'camped on any cell' state in NR or LTE.

The UE variable VarMobilityHistoryReport includes the mobility history information and may be determined according to embodiments herein. The UE variable VarMobilityHistoryReport is illustrated below:

### VarMobilityHistoryReport UE variable

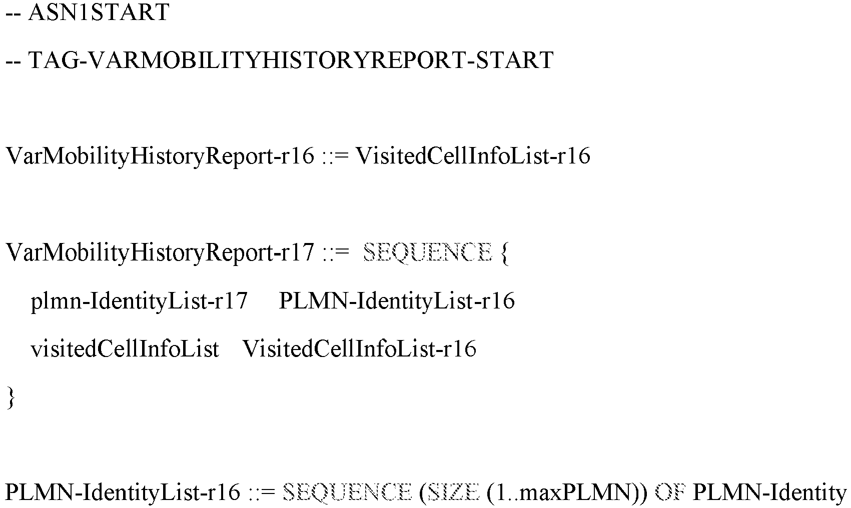

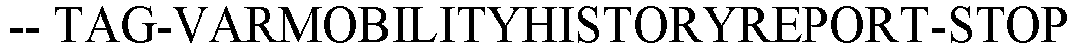

In some embodiments, the UE removes the logs associated to previous PLMN related cells' MHI upon changing the PLMN (at the time of changing PLMN).

In some embodiments, there is still a possibility that the UE might end up storing and reporting the MHI information associated to a different PLMN. For example, Cell-A (PLMN1) > Cell-B (PLMN2) in which if the UE stays in cell-A for 5 minutes and after cell reselection to Cell-B if it comes to connected, then the UE still has MHI associated to cell-A. Therefore, a further change is proposed in an embodiment wherein the UE deletes the MHI associated to a different PLMN upon PLMN change.

In some embodiments, a procedure specifies how the mobility history information is stored by the UE, covering RRC_IDLE, RRC_INACTIVE and RRC_CONNECTED. If the UE supports storage of mobility history information, the UE shall:
1> Upon change of suitable cell, consisting of PCell in RRC_CONNECTED or serving cell in RRC_INACTIVE (for NR cell) or in RRC_IDLE (for NR or E-UTRA cell), to another NR or E-UTRA cell, or when entering any cell selection' state from 'camped normally' state in NR or LTE:
   2> if the RPLMN while being in current PCell/serving cell is included in plmn-IdentityList stored in VarMobilityHistoryReport;
      3> set the plmn-IdentityList in VarMobilityHistoryReport to include the list of EPLMNs stored by the UE (i.e. includes the RPLMN) in previous PCell/serving cell without exceeding the limit of maxPLMN;
      3> include an entry in variable VarMobilityHistoryReport possibly after removing the oldest entry, if necessary, according to following:
         4> if the global cell identity of the previous PCell/serving cell is available:
            5>include the global cell identity of that cell in the field visitedCellId of the entry;
         4> else:
            5>include the physical cell identity and carrier frequency of that cell in the field visitedCellId of the entry;
         4> set the field timeSpent of the entry as the time spent in the previous PCell/serving cell;
   2>else;
      3> remove all the entries from the VarMobilityHistoryReport:
1> upon entering camped normally state in NR (in RRC_IDLE, RRC_INACTIVE or RRC_CONNECTED) or E-UTRA (in RRC_IDLE or RRC_CONNECTED) while previously in 'any cell selection' state or 'camped on any cell' state in NR or LTE:
   2> include an entry in variable VarMobilityHistoryReport possibly after removing the oldest entry, if necessary, according to following:
   3> set the field timeSpent of the entry as the time spent in 'any cell selection' state and/or 'camped on any cell' state in NR or LTE.

Some embodiments provide that the UE variable VarMobilityHistoryReport includes the mobility history information and may be determined as illustrated below:

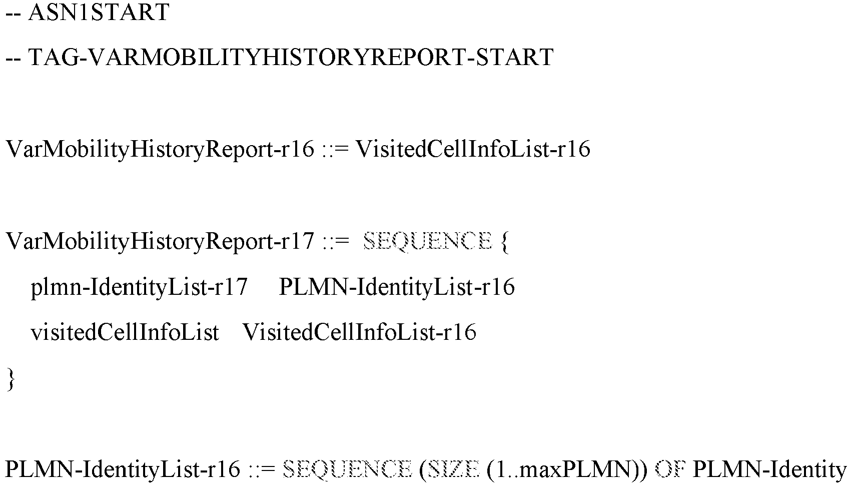

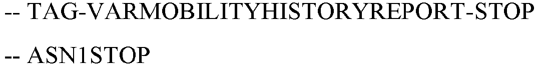

In some embodiments, the UE logs a combined time spent in the previous PLMN (at the time of changing PLMN). In such embodiments, the UE does not delete all the information associated to previous PLMN related mobility history information when it selects a new cell associated to a PLMN different than the PLMN controlling the cell in which the UE was previously connected or was previously camping. Instead, the UE replaces all the cell specific MHI with a single entry that informs the time spent in different PLMN.

In some sub-embodiments, this single time spent value may be encoded against the last serving cell of the previous PLMN. In some embodiments, this single time value is the sum of time spent in each cell while being in the previous PLMN. In some other embodiments, this single time value is the time spent in the previous serving cell while being in the previous PLMN.

In some other sub-embodiments, this single time spent value is encoded as out-of-coverage (the example embodiment given below refers to this embodiment).

In some other embodiment, the single time spent value is encoded against the PLMN ID of the previous RPLMN.

Some embodiments provide a procedure that specifies how the mobility history information is stored by the UE, covering RRC_IDLE, RRC_INACTIVE and RRC_CONNECTED. If the UE supports storage of mobility history information, the UE shall:
1>Upon change of suitable cell, consisting of PCell in RRC_CONNECTED or serving cell SLTE.

In some embodiments, the UE variable VarMobilityHistoryReport includes the mobility history information and may be determined as illustrated below:

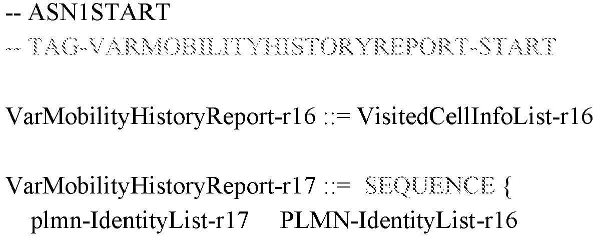

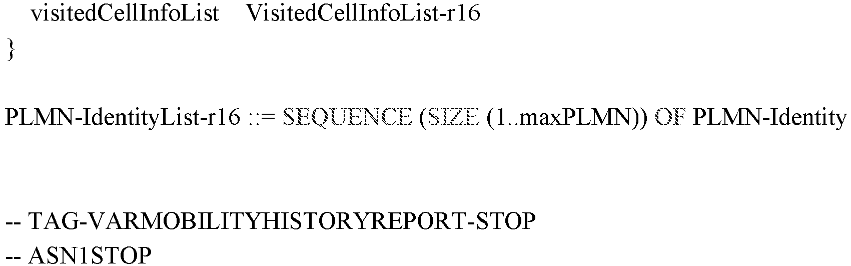

In other embodiments and independent of the previous embodiments, it is addressed the case in which the UE visits multiple PLMN before attaching to the current PLMN. When the UE selects a new cell associated to a PLMN different than the PLMN controlling the cell in which the UE was previously connected or was previously camping, the UE replaces all the cell specific MHI associated to the previous PLMN with a single entry that informs the time spent in the previous PLMN.

Hence, as per the previous embodiments, for each visited PLMN, the UE stores a single time spent value encoded against the last serving cell of the visited PLMN. In some embodiments, this single time value is the sum of time spent in each cell while being in such visited PLMN.

In some embodiments, the UE variable VarMobilityHistoryReport includes the mobility history information and may be determined as illustrated below:

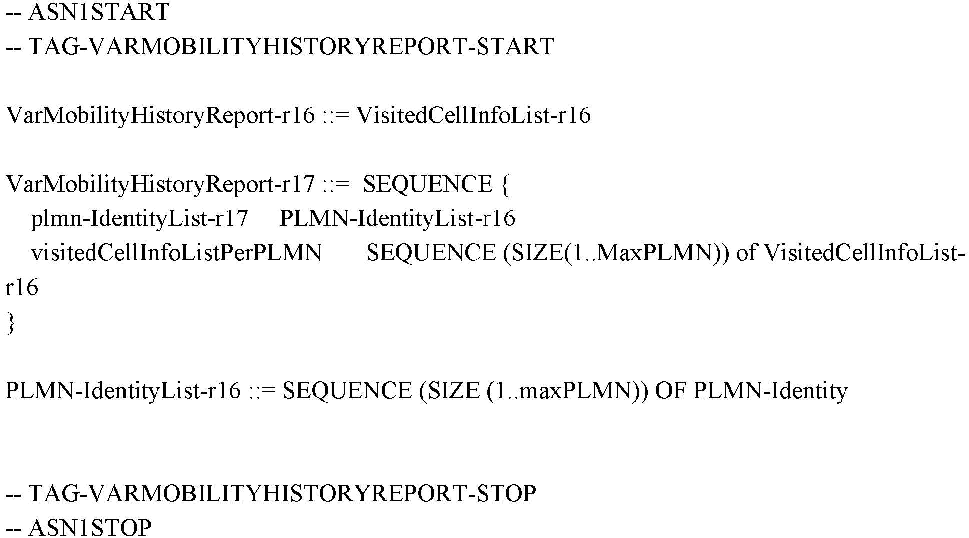

In this example, the visitedCellInfoListPerPLMN will be filled in the chronological order of visited PLMN, and for the previous PLMN the VisitedCellInfoList will include the single entry as mentioned above, while for the current PLMN, in which the UE is camping (or connected), the VisitedCellInfoList contains the all the entries associated to the visited cells in such PLMN.

In some embodiments, the UE may indicate the availability of the mobility history information (e.g., as part of RRC Setup or RRC Resume procedures) to the network if the MHI includes the PLMN identity of the serving cell. A non-limiting example implementation of the method is shown in the following as part of RRC Setup and RRC Resume procedure. In some embodiments, the UE shall perform the following actions upon reception of the RRCSetup:

### 15oryAvail in the RRCSetupComplete message.

Some embodiments provide that reception of the RRCResume by the UE shall cause the UE to:
1>set the content of the of RRCResumeComplete message as follows:
   2> if the UE supports storage of mobility history information and the UE has mobility history information available in VarMobilityHistoryReport, and if the RPLMN is included in plmn-Identity information stored in VarMobilityHistoryReport:
      3> include the mobilityHistoryAvail in the RRCResumeComplete message;

In some embodiments, mobility history information reporting per PLMN provides that upon reception of a mobility history request from a network node owning a cell with a determined PLMN (e.g., Registered PLMN or RPLMN), the UE sends to the network only the mobility history information related to the PLMN identity information of the cell requesting the mobility history information, and deletes the content of the mobility history information associated to that PLMN from the VarMobilityHistoryReport.

Some embodiments provide that upon receiving the UEInformationRequest message, the UE shall, only after successful security activation:
1> if the mobilityHistoryReportReq is set to true, and the UE has random access related information available in VarRA-Report and if the RPLMN is included in plmn-Identity information stored in VarMobilityHistoryReport:
   2> include the mobilityHistoryReport and set it to include entries from VarMobilityHistoryReport;

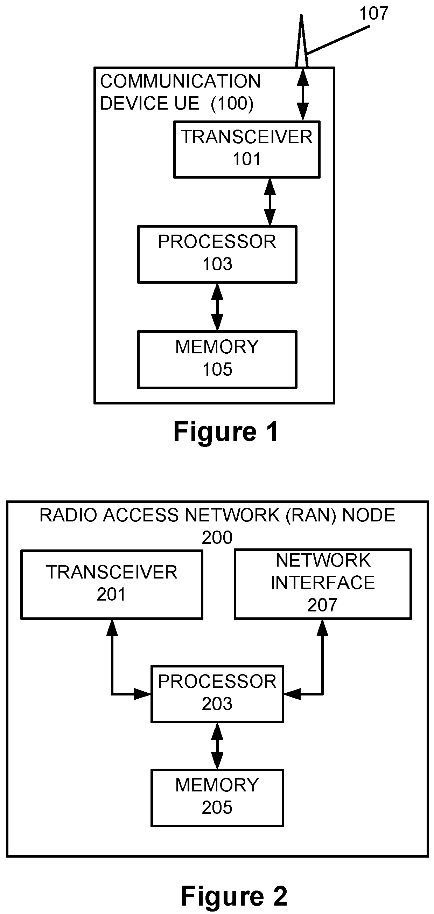

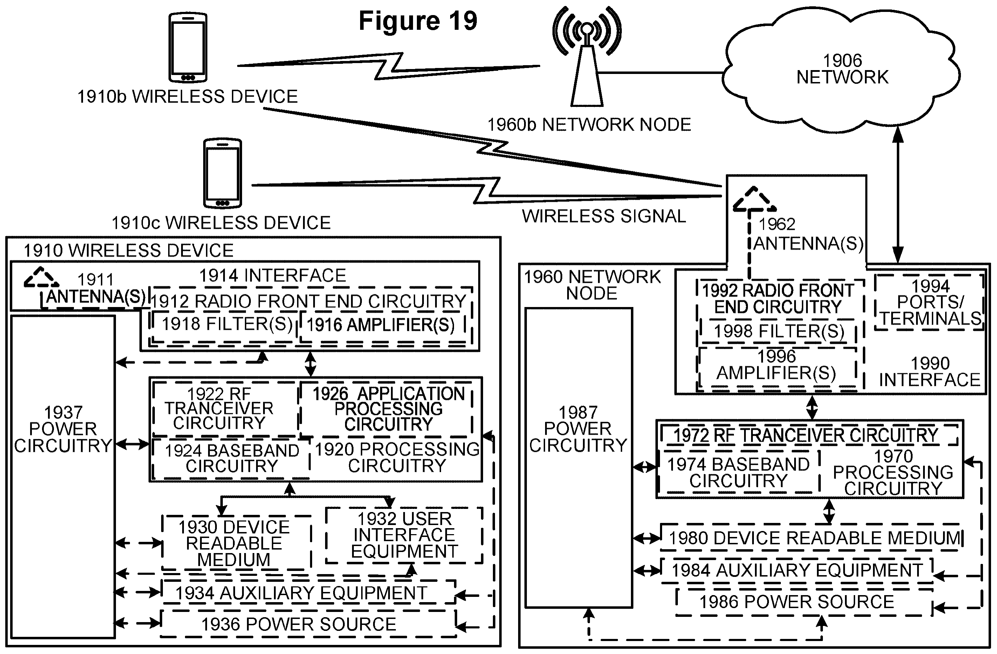

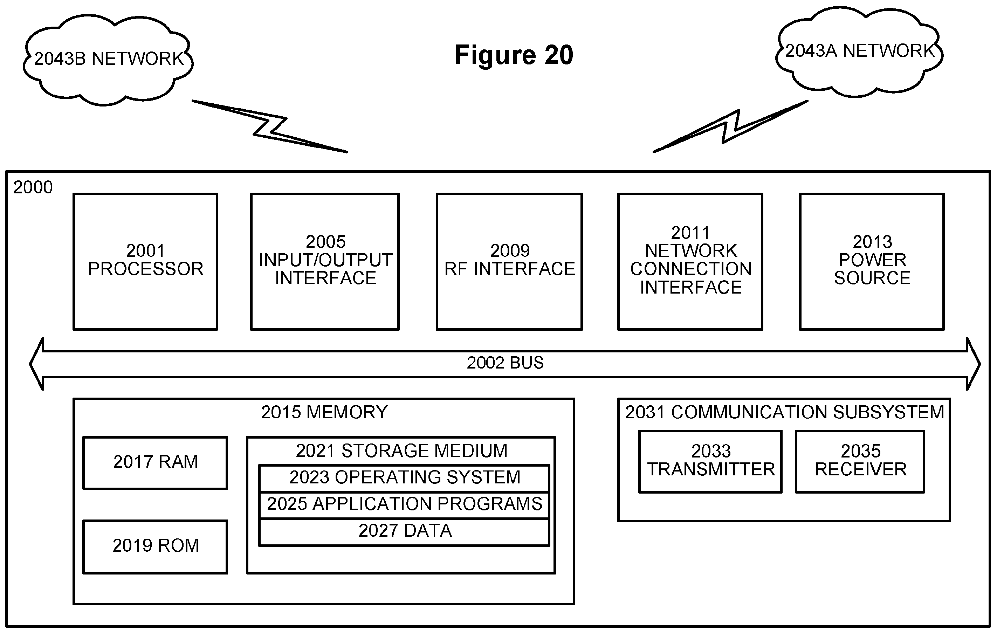

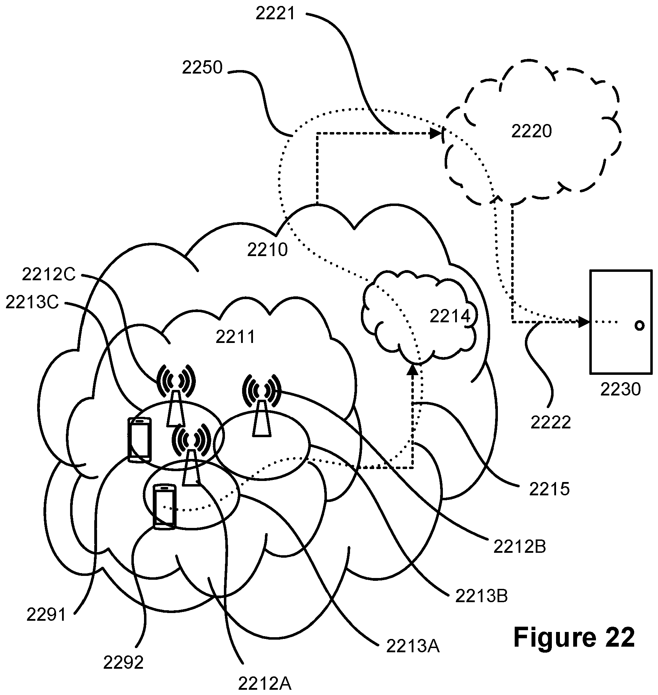

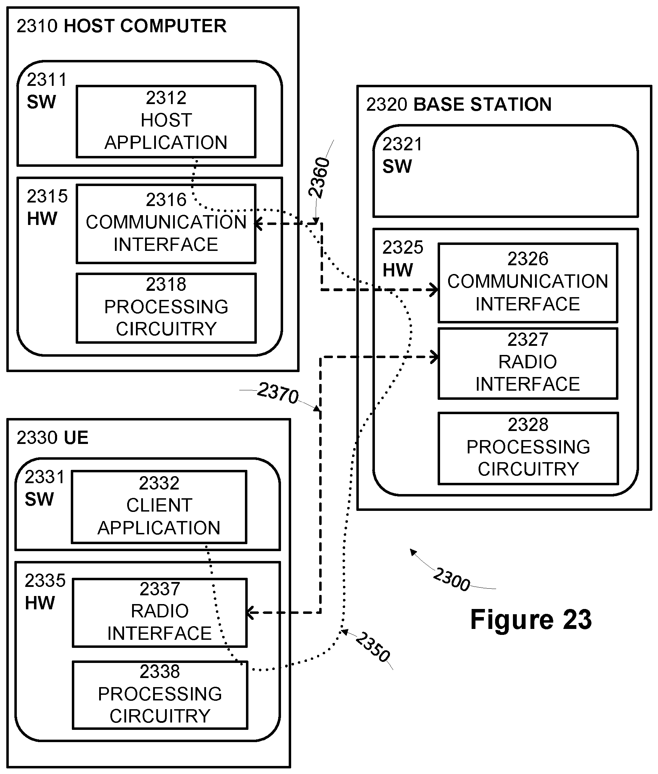

Figure 1 is a block diagram illustrating elements of a communication device UE 100 (also referred to as a mobile terminal, a mobile communication terminal, a wireless device, a wireless communication device, a wireless terminal, mobile device, a wireless communication terminal, user equipment, UE, a user equipment node/terminal/device, etc.) configured to provide wireless communication according to embodiments of inventive concepts. (Communication device 100 may be provided, for example, as discussed below with respect to wireless device 1910 of Figure 19, UE 2000 of Figure 20, UEs 2291, 2292 of Figure 22, and/or UE 2330 of Figure 23.) As shown, communication device UE may include an antenna 107 (e.g., corresponding to antenna 1911 of Figure 19), and transceiver circuitry 101 (also referred to as a transceiver, e.g., corresponding to interface 1914 of Figure 19) including a transmitter and a receiver configured to provide uplink and downlink radio communications with a base station(s) (e.g., corresponding to network node 1960 of Figure 19, also referred to as a RAN node) of a radio access network. Communication device UE may also include processing circuitry 103 (also referred to as a processor, e.g., corresponding to processing circuitry 1920 of Figure 19) coupled to the transceiver circuitry, and memory circuitry 105 (also referred to as memory, e.g., corresponding to device readable medium 1930 of Figure 19) coupled to the processing circuitry. The memory circuitry 105 may include computer readable program code that when executed by the processing circuitry 103 causes the processing circuitry to perform operations according to embodiments disclosed herein. According to other embodiments, processing circuitry 103 may be defined to include memory so that separate memory circuitry is not required. Communication device UE 100 may also include an interface (such as a user interface) coupled with processing circuitry 103, and/or communication device UE 100 may be incorporated in a vehicle.

As discussed herein, operations of communication device UE 100 may be performed by processing circuitry 103 and/or transceiver circuitry 101. For example, processing circuitry 103 may control transceiver circuitry 101 to transmit communications through transceiver circuitry 101 over a radio interface to a radio access network node (also referred to as a base station) and/or to receive communications through transceiver circuitry 101 from a RAN node over a radio interface. Moreover, modules may be stored in memory circuitry 105, and these modules may provide instructions so that when instructions of a module are executed by processing circuitry 103, processing circuitry 103 performs respective operations (e.g., operations discussed below with respect to Example Embodiments relating to wireless communication devices). According to some embodiments, a communication device UE 100 and/or an element(s)/function(s) thereof may be embodied as a virtual node/nodes and/or a virtual machine/machines.

Figure 2 is a block diagram illustrating elements of a radio access network RAN node 200 (also referred to as a network node, base station, eNodeB/eNB, gNodeB/gNB, etc.) of a Radio Access Network (RAN) configured to provide cellular communication according to embodiments of inventive concepts. (RAN node 200 may be provided, for example, as discussed below with respect to network node 1960 of Figure 19, base stations 2212a, 2212b, 2212c of Figure 22, and/or base station 2320 of Figure 23.) As shown, the RAN node 200 may include transceiver circuitry 201 (also referred to as a transceiver, e.g., corresponding to portions of interface 1990 of Figure 19) including a transmitter and a receiver configured to provide uplink and downlink radio communications with mobile terminals. The RAN node 200 may include network interface circuitry 207 (also referred to as a network interface, e.g., corresponding to portions of interface 1990 of Figure 19) configured to provide communications with other nodes (e.g., with other base stations) of the RAN and/or core network CN. The network node 200 may also include processing circuitry 203 (also referred to as a processor, e.g., corresponding to processing circuitry 1970) coupled to the transceiver circuitry, and memory circuitry 205 (also referred to as memory, e.g., corresponding to device readable medium 1980 of Figure 19) coupled to the processing circuitry. The memory circuitry 205 may include computer readable program code that when executed by the processing circuitry 203 causes the processing circuitry to perform operations according to embodiments disclosed herein. According to other embodiments, processing circuitry 203 may be defined to include memory so that a separate memory circuitry is not required.

As discussed herein, operations of the RAN node 200 may be performed by processing circuitry 203, network interface 207, and/or transceiver 201. For example, processing circuitry 203 may control transceiver 201 to transmit downlink communications through transceiver 201 over a radio interface to one or more mobile terminals UEs and/or to receive uplink communications through transceiver 201 from one or more mobile terminals UEs over a radio interface. Similarly, processing circuitry 203 may control network interface 207 to transmit communications through network interface 207 to one or more other network nodes and/or to receive communications through network interface from one or more other network nodes. Moreover, modules may be stored in memory 205, and these modules may provide instructions so that when instructions of a module are executed by processing circuitry 203, processing circuitry 203 performs respective operations (e.g., operations discussed below with respect to Example Embodiments relating to RAN nodes). According to some embodiments, RAN node 200 and/or an element(s)/function(s) thereof may be embodied as a virtual node/nodes and/or a virtual machine/machines.

According to some other embodiments, a network node may be implemented as a core network CN node without a transceiver. In such embodiments, transmission to a wireless communication device UE may be initiated by the network node so that transmission to the wireless communication device UE is provided through a network node including a transceiver (e.g., through a base station or RAN node). According to embodiments where the network node is a RAN node including a transceiver, initiating transmission may include transmitting through the transceiver.

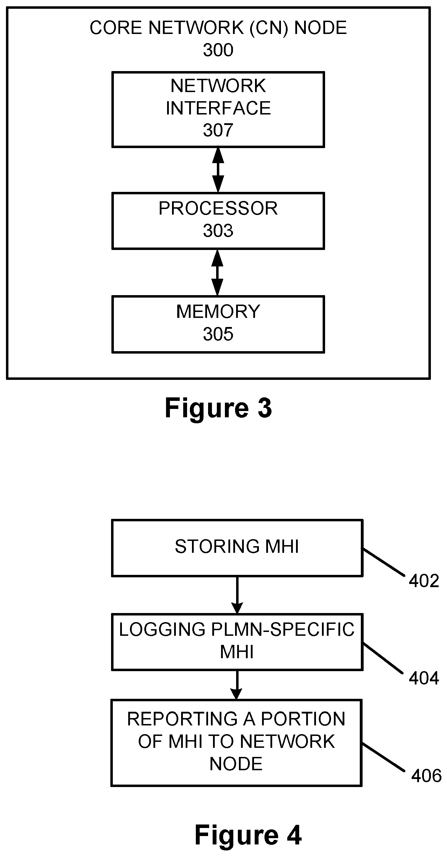

Figure 3 is a block diagram illustrating elements of a core network CN node 300 (e.g., an session management function (SMF) node, an access and mobility management function (AMF) node, etc.) of a communication network configured to provide cellular communication according to embodiments of inventive concepts. As shown, the CN node 300 may include network interface circuitry 307 (also referred to as a network interface) configured to provide communications with other nodes of the core network and/or the radio access network RAN. The CN node 300 may also include a processing circuitry 303 (also referred to as a processor) coupled to the network interface circuitry, and memory circuitry 305 (also referred to as memory) coupled to the processing circuitry. The memory circuitry 305 may include computer readable program code that when executed by the processing circuitry 303 causes the processing circuitry to perform operations according to embodiments disclosed herein. According to other embodiments, processing circuitry 303 may be defined to include memory so that a separate memory circuitry is not required.

As discussed herein, operations of the CN node 300 may be performed by processing circuitry 303 and/or network interface circuitry 307. For example, processing circuitry 303 may control network interface circuitry 307 to transmit communications through network interface circuitry 307 to one or more other network nodes and/or to receive communications through network interface circuitry from one or more other network nodes. Moreover, modules may be stored in memory 305, and these modules may provide instructions so that when instructions of a module are executed by processing circuitry 303, processing circuitry 303 performs respective operations (e.g., operations discussed below with respect to Example Embodiments relating to core network nodes). According to some embodiments, CN node 300 and/or an element(s)/function(s) thereof may be embodied as a virtual node/nodes and/or a virtual machine/machines.

Reference is now made to Figure 4, which is a flow diagram illustrating operations of embodiments herein in a user equipment 100 according to some embodiments. Operations include storing (in block 402) mobility history information, MHI, independent of a radio resource control, RRC, state. Some embodiments provide that the MHI includes a cell identifier that is a current serving cell and time information corresponding to how long the UE 100 has been in the serving cell. Operations include logging (in block 404) public land mobile network, PLMN,-specific MHI into the UE 100 and reporting (in block 406) at least a portion of the MHI to a network node.

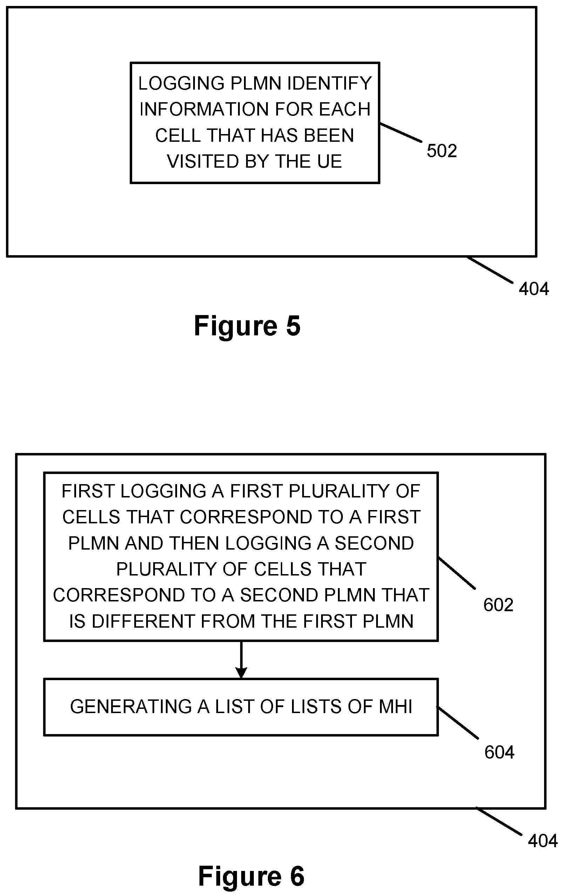

Reference is now made to Figure 5, which is a flow diagram illustrating operations of embodiments for logging PLMN-specific MHI according to some embodiments. In some embodiments, logging the PLMN-specific MHI into the UE 100 includes logging (in block 502) PLMN identify information for each cell that has been visited by the UE.

Reference is now made to Figure 6, which is a flow diagram illustrating operations of embodiments for logging PLMN-specific MHI according to some embodiments. In some embodiments, logging the PLMN-specific MHI into the UE 100 includes first logging (in block 602) a first plurality of cells that correspond to a first PLMN and then logging a second plurality of cells that correspond to a second PLMN that is different from the first PLMN. Some embodiments provide that first logging the first plurality of cells and then logging the second plurality of cells comprises generating (in block 604) a list of lists of MHI.

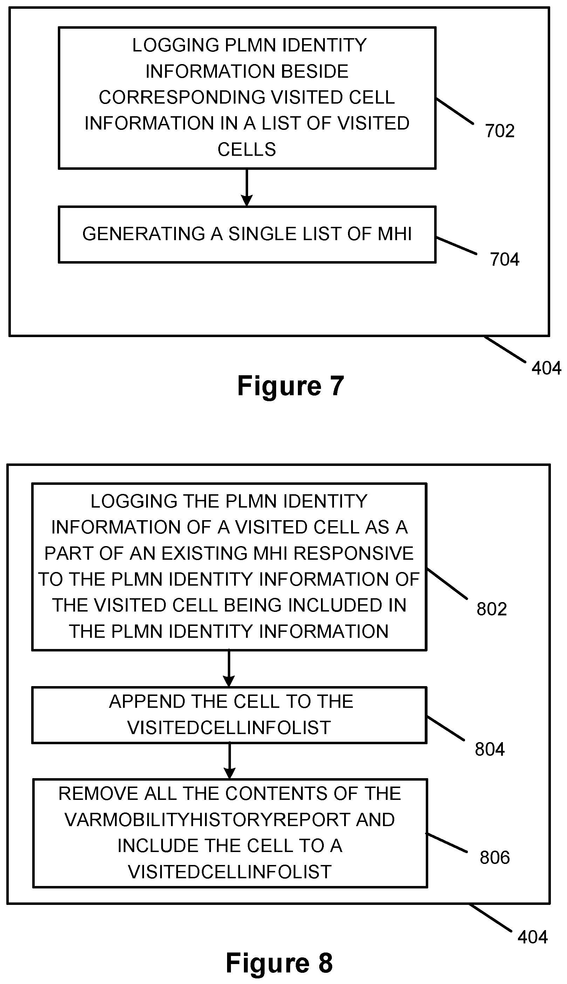

Reference is now made to Figure 7, which is a flow diagram illustrating operations of embodiments for logging PLMN-specific MHI according to some embodiments. In some embodiments, logging the PLMN-specific MHI into the UE 100 includes logging (in block 702) PLMN identity information beside corresponding visited cell information in a list of visited cells. In some embodiments, logging PLMN identity information beside corresponding visited cell information in a list of visited cells includes generating (in block 704) a single list of MHI.

Reference is now made to Figure 8, which is a flow diagram illustrating operations of embodiments for logging PLMN-specific MHI according to some embodiments. In some embodiments, logging the PLMN-specific MHI into the UE 100 includes logging (in block 802) the PLMN identity information of a visited cell as a part of an existing MHI responsive to the PLMN identity information of the visited cell being included in the PLMN identity information that is in an existing mobility history information variable of the MHI.

In some embodiments, responsive to the registered PLMN, RPLMN, being part of the PLMN identity information stored in a UE variable varMobilityHistoryReport, the UE 100 is further configured to append (in block 804) the cell to the visitedCellInfoList. Some embodiments provide that responsive to the RPLMN not being part of the PLMN identity information stored in a UE variable varMobilityHistoryReport, the UE 100 is further configured to remove (in block 806) all the contents of the varMobilityHistoryReport and include the cell to a visitedCellInfoList. In some embodiments, responsive to the RPLMN being part of the PLMN identity information stored in the UE variable varMobilityHistoryReport, then the UE 100 is further configured to append the cell to the visitedCellInfoList; otherwise, the UE 100 is further configured to replace previous contents of the varMobilityHistoryReport that belonged to a different PLMN with a single entry that indicates the total time spent in that PLMN.

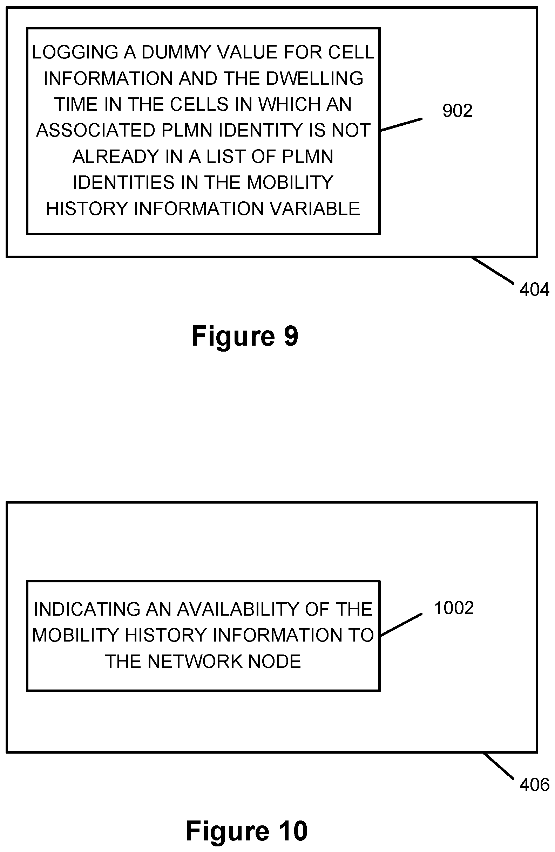

Reference is now made to Figure 9, which is a flow diagram illustrating operations of embodiments for logging PLMN-specific MHI according to some embodiments. In some embodiments, logging the PLMN-specific MHI into the UE 100 includes logging (in block 902) a dummy value for cell information and the dwelling time in the cells in which an associated PLMN identity is not already in a list of PLMN identities in the mobility history information variable.

Reference is now made to Figure 10, which is a flow diagram illustrating operations of embodiments for reporting at least the portion of the MHI to the network node 200 according to some embodiments. In some embodiments, reporting at least the portion of the MHI to the network node includes indicating (in block 1002) an availability of the mobility history information to the network node 200 if the PLMN identity of the network node is equal to one of the PLMN identity that is logged as part of a MHI variable.

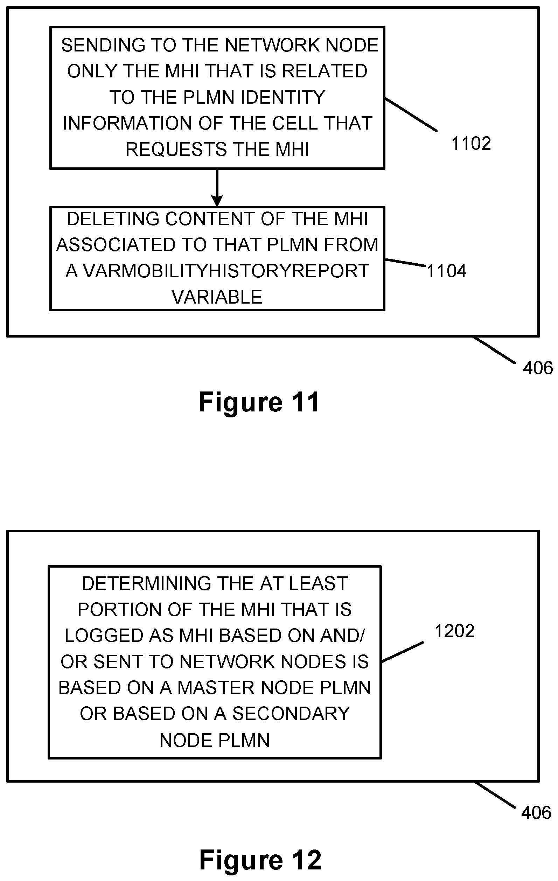

Reference is now made to Figure 11, which is a flow diagram illustrating operations of embodiments for reporting at least the portion of the MHI to the network node 200 according to some embodiments. In some embodiments, reporting at least the portion of the MHI to the network node includes sending (in block 1102) to the network node 200 only the MHI that is related to the PLMN identity information of the cell that requests the MHI and deleting (1804) content of the MHI associated to that PLMN from a VarMobilityHistoryReport variable.

Reference is now made to Figure 12, which is a flow diagram illustrating operations of embodiments for reporting at least the portion of the MHI to the network node 200 according to some embodiments. In some embodiments, reporting at least the portion of the MHI to the network node 200 includes determining (in block 1202) the at least portion of the MHI that is logged as MHI based on and/or sent to network nodes is based on a master node PLMN or based on a secondary node PLMN. In some embodiments, responsive to MHI of the secondary nodes' PLMN associated network not being shared and the MHI primary nodes' PLMN associated network being shared, the log provides that there were secondary nodes that only share the PCell information and leave visited PSCells empty.

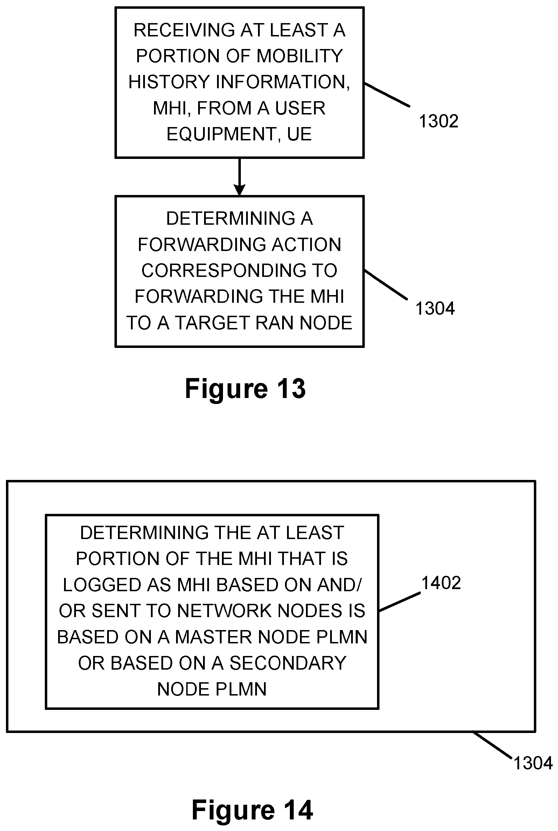

Reference is now made to Figure 13, which is a flow diagram illustrating operations of embodiments herein in a RAN node 200 (or CN node 300) according to some embodiments. Operations include receiving (in block 1302) at least a portion of mobility history information, MHI, from a user equipment, UE, that is independent of radio resource control, RRC, state and that includes a cell identifier that is a current serving cell and time information corresponding to how long the UE has been in the serving cell. Operations include determining (in block 1304) a forwarding action corresponding to forwarding the MHI to a target RAN node.

Reference is now made to Figure 14, which is a flow diagram illustrating operations of embodiments for determining the forwarding action corresponding to forwarding the MHI to the target RAN node according to some embodiments. In some embodiments, determining the forwarding action corresponding to forwarding the MHI to the target RAN node includes determining (in block 1402) to forward the MHI during handover signaling to the target RAN node only if the target RAN node supports a same public land mobile network, PLMN, as a source cell corresponding to the MHI.

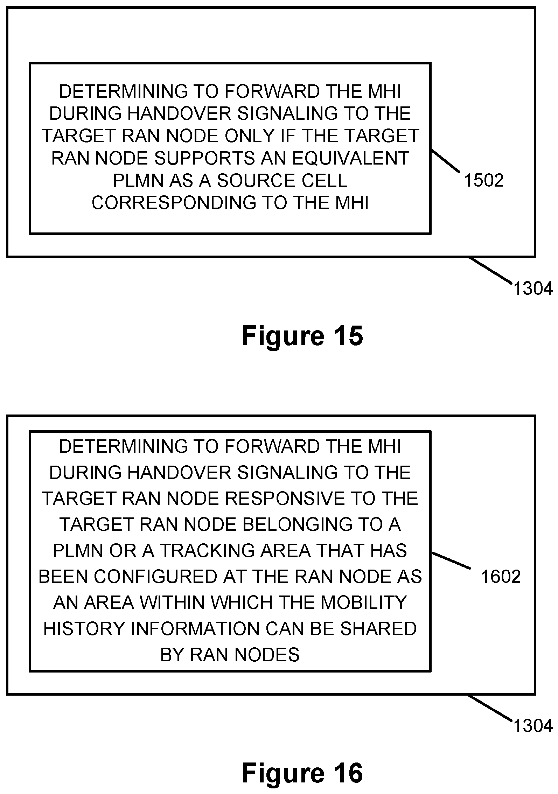

Reference is now made to Figure 15, which is a flow diagram illustrating operations of embodiments for determining the forwarding action corresponding to forwarding the MHI to the target RAN node according to some embodiments. In some embodiments, determining the forwarding action corresponding to forwarding the MHI to the target RAN node includes determining (in block 1502) to forward the MHI during handover signaling to the target RAN node only if the target RAN node supports an equivalent PLMN as a source cell corresponding to the MHI.

Reference is now made to Figure 16, which is a flow diagram illustrating operations of embodiments for determining the forwarding action corresponding to forwarding the MHI to the target RAN node according to some embodiments. In some embodiments, determining the forwarding action corresponding to forwarding the MHI to the target RAN node includes determining (in block 1602) to forward the MHI during handover signaling to the target RAN node responsive to the target RAN node belonging to a PLMN or a tracking area that has been configured at the RAN node as an area within which the mobility history information can be shared by RAN nodes.

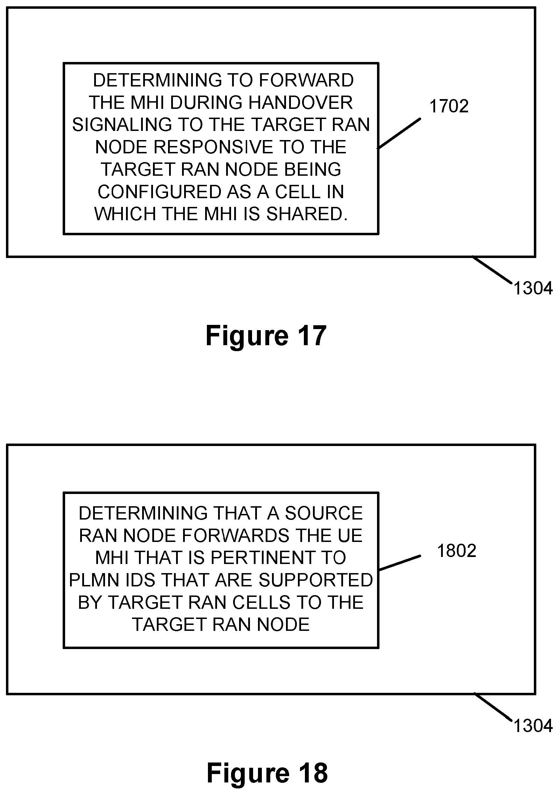

Reference is now made to Figure 17, which is a flow diagram illustrating operations of embodiments for determining the forwarding action corresponding to forwarding the MHI to the target RAN node according to some embodiments. In some embodiments, determining the forwarding action corresponding to forwarding the MHI to the target RAN node includes determining (in block 1702) to forward the MHI during handover signaling to the target RAN node responsive to the target RAN node being configured as a cell in which the MHI is shared.

Reference is now made to Figure 18, which is a flow diagram illustrating operations of embodiments for determining the forwarding action corresponding to forwarding the MHI to the target RAN node according to some embodiments. In some embodiments, determining the forwarding action corresponding to forwarding the MHI to the target RAN node includes determining (in block 1802) that a source RAN node forwards the UE MHI that is pertinent to PLMN IDs that are supported by target RAN cells to the target RAN node.

Explanations are provided below for various embodiments.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Figure 19 illustrates a wireless network in accordance with some embodiments.

Although the subject matter described herein may be implemented in any appropriate type of system using any suitable components, the embodiments disclosed herein are described in relation to a wireless network, such as the example wireless network illustrated in Figure 19. For simplicity, the wireless network of Figure 19 only depicts network 1906, network nodes 1960 and 1960B, and WDs 1910, 1910B, and 1910A (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node 1960 and wireless device (WD) 1910 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1906 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1960 and WD 1910 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multistandard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 19, network node 1960 includes processing circuitry 1970, device readable medium 1980, interface 1990, auxiliary equipment 1984, power source 1986, power circuitry 1987, and antenna 1962. Although network node 1960 illustrated in the example wireless network of Figure 19 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1960 are depicted as single boxes located within a larger box, or nested within multiple boxes, in practice, a network node may comprise multiple different physical components that make up a single illustrated component (e.g., device readable medium 1980 may comprise multiple separate hard drives as well as multiple RAM modules).

Similarly, network node 1960 may be composed of multiple physically separate components (e.g., a NodeB component and a RNC component, or a BTS component and a BSC component, etc.), which may each have their own respective components. In certain scenarios in which network node 1960 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1960 may be configured to support multiple radio access technologies (RATs). In such embodiments, some components may be duplicated (e.g., separate device readable medium 1980 for the different RATs) and some components may be reused (e.g., the same antenna 1962 may be shared by the RATs). Network node 1960 may also include multiple sets of the various illustrated components for different wireless technologies integrated into network node 1960, such as, for example, GSM, WCDMA, LTE, NR, WiFi, or Bluetooth wireless technologies. These wireless technologies may be integrated into the same or different chip or set of chips and other components within network node 1960.

Processing circuitry 1970 is configured to perform any determining, calculating, or similar operations (e.g., certain obtaining operations) described herein as being provided by a network node. These operations performed by processing circuitry 1970 may include processing information obtained by processing circuitry 1970 by, for example, converting the obtained information into other information, comparing the obtained information or converted information to information stored in the network node, and/or performing one or more operations based on the obtained information or converted information, and as a result of said processing making a determination.

Processing circuitry 1970 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1960 components, such as device readable medium 1980, network node 1960 functionality. For example, processing circuitry 1970 may execute instructions stored in device readable medium 1980 or in memory within processing circuitry 1970. Such functionality may include providing any of the various wireless features, functions, or benefits discussed herein. In some embodiments, processing circuitry 1970 may include a system on a chip (SOC).

In some embodiments, processing circuitry 1970 may include one or more of radio frequency (RF) transceiver circuitry 1972 and baseband processing circuitry 1974. In some embodiments, radio frequency (RF) transceiver circuitry 1972 and baseband processing circuitry 1974 may be on separate chips (or sets of chips), boards, or units, such as radio units and digital units. In alternative embodiments, part or all of RF transceiver circuitry 1972 and baseband processing circuitry 1974 may be on the same chip or set of chips, boards, or units

In certain embodiments, some or all of the functionality described herein as being provided by a network node, base station, eNB or other such network device may be performed by processing circuitry 1970 executing instructions stored on device readable medium 1980 or memory within processing circuitry 1970. In alternative embodiments, some or all of the functionality may be provided by processing circuitry 1970 without executing instructions stored on a separate or discrete device readable medium, such as in a hard-wired manner. In any of those embodiments, whether executing instructions stored on a device readable storage medium or not, processing circuitry 1970 can be configured to perform the described functionality. The benefits provided by such functionality are not limited to processing circuitry 1970 alone or to other components of network node 1960, but are enjoyed by network node 1960 as a whole, and/or by end users and the wireless network generally.

Device readable medium 1980 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1970. Device readable medium 1980 may store any suitable instructions, data or information, including a computer program, software, an application including one or more of logic, rules, code, tables, etc. and/or other instructions capable of being executed by processing circuitry 1970 and, utilized by network node 1960. Device readable medium 1980 may be used to store any calculations made by processing circuitry 1970 and/or any data received via interface 1990. In some embodiments, processing circuitry 1970 and device readable medium 1980 may be considered to be integrated.

Interface 1990 is used in the wired or wireless communication of signalling and/or data between network node 1960, network 1906, and/or WDs 1910. As illustrated, interface 1990 comprises port(s)/terminal(s) 1994 to send and receive data, for example to and from network 1906 over a wired connection. Interface 1990 also includes radio front end circuitry 1992 that may be coupled to, or in certain embodiments a part of, antenna 1962. Radio front end circuitry 1992 comprises filters 1998 and amplifiers 1996. Radio front end circuitry 1992 may be connected to antenna 1962 and processing circuitry 1970. Radio front end circuitry may be configured to condition signals communicated between antenna 1962 and processing circuitry 1970. Radio front end circuitry 1992 may receive digital data that is to be sent out to other network nodes or WDs via a wireless connection. Radio front end circuitry 1992 may convert the digital data into a radio signal having the appropriate channel and bandwidth parameters using a combination of filters 1998 and/or amplifiers 1996. The radio signal may then be transmitted via antenna 1962. Similarly, when receiving data, antenna 1962 may collect radio signals which are then converted into digital data by radio front end circuitry 1992. The digital data may be passed to processing circuitry 1970. In other embodiments, the interface may comprise different components and/or different combinations of components.

In certain alternative embodiments, network node 1960 may not include separate radio front end circuitry 1992, instead, processing circuitry 1970 may comprise radio front end circuitry and may be connected to antenna 1962 without separate radio front end circuitry 1992. Similarly, in some embodiments, all or some of RF transceiver circuitry 1972 may be considered a part of interface 1990. In still other embodiments, interface 1990 may include one or more ports or terminals 1994, radio front end circuitry 1992, and RF transceiver circuitry 1972, as part of a radio unit (not shown), and interface 1990 may communicate with baseband processing circuitry 1974, which is part of a digital unit (not shown).

Antenna 1962 may include one or more antennas, or antenna arrays, configured to send and/or receive wireless signals. Antenna 1962 may be coupled to radio front end circuitry 1992 and may be any type of antenna capable of transmitting and receiving data and/or signals wirelessly. In some embodiments, antenna 1962 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1962 may be separate from network node 1960 and may be connectable to network node 1960 through an interface or port.

Antenna 1962, interface 1990, and/or processing circuitry 1970 may be configured to perform any receiving operations and/or certain obtaining operations described herein as being performed by a network node. Any information, data and/or signals may be received from a wireless device, another network node and/or any other network equipment. Similarly, antenna 1962, interface 1990, and/or processing circuitry 1970 may be configured to perform any transmitting operations described herein as being performed by a network node. Any information, data and/or signals may be transmitted to a wireless device, another network node and/or any other network equipment.

Power circuitry 1987 may comprise, or be coupled to, power management circuitry and is configured to supply the components of network node 1960 with power for performing the functionality described herein. Power circuitry 1987 may receive power from power source 1986. Power source 1986 and/or power circuitry 1987 may be configured to provide power to the various components of network node 1960 in a form suitable for the respective components (e.g., at a voltage and current level needed for each respective component). Power source 1986 may either be included in, or external to, power circuitry 1987 and/or network node 1960. For example, network node 1960 may be connectable to an external power source (e.g., an electricity outlet) via an input circuitry or interface such as an electrical cable, whereby the external power source supplies power to power circuitry 1987. As a further example, power source 1986 may comprise a source of power in the form of a battery or battery pack which is connected to, or integrated in, power circuitry 1987. The battery may provide backup power should the external power source fail. Other types of power sources, such as photovoltaic devices, may also be used.

Alternative embodiments of network node 1960 may include additional components beyond those shown in Figure 19 that may be responsible for providing certain aspects of the network node's functionality, including any of the functionality described herein and/or any functionality necessary to support the subject matter described herein. For example, network node 1960 may include user interface equipment to allow input of information into network node 1960 and to allow output of information from network node 1960. This may allow a user to perform diagnostic, maintenance, repair, and other administrative functions for network node 1960.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1910 includes antenna 1911, interface 1914, processing circuitry 1920, device readable medium 1930, user interface equipment 1932, auxiliary equipment 1934, power source 1936 and power circuitry 1937. WD 1910 may include multiple sets of one or more of the illustrated components for different wireless technologies supported by WD 1910, such as, for example, GSM, WCDMA, LTE, NR, WiFi, WiMAX, or Bluetooth wireless technologies, just to mention a few. These wireless technologies may be integrated into the same or different chips or set of chips as other components within WD 1910.

Antenna 1911 may include one or more antennas or antenna arrays, configured to send and/or receive wireless signals, and is connected to interface 1914. In certain alternative embodiments, antenna 1911 may be separate from WD 1910 and be connectable to WD 1910 through an interface or port. Antenna 1911, interface 1914, and/or processing circuitry 1920 may be configured to perform any receiving or transmitting operations described herein as being performed by a WD. Any information, data and/or signals may be received from a network node and/or another WD. In some embodiments, radio front end circuitry and/or antenna 1911 may be considered an interface.

As illustrated, interface 1914 comprises radio front end circuitry 1912 and antenna 1911. Radio front end circuitry 1912 comprise one or more filters 1918 and amplifiers 1916. Radio front end circuitry 1912 is connected to antenna 1911 and processing circuitry 1920, and is configured to condition signals communicated between antenna 1911 and processing circuitry 1920. Radio front end circuitry 1912 may be coupled to or a part of antenna 1911. In some embodiments, WD 1910 may not include separate radio front end circuitry 1912; rather, processing circuitry 1920 may comprise radio front end circuitry and may be connected to antenna 1911. Similarly, in some embodiments, some or all of RF transceiver circuitry 1922 may be considered a part of interface 1914. Radio front end circuitry 1912 may receive digital data that is to be sent out to other network nodes or WDs via a wireless connection. Radio front end circuitry 1912 may convert the digital data into a radio signal having the appropriate channel and bandwidth parameters using a combination of filters 1918 and/or amplifiers 1916. The radio signal may then be transmitted via antenna 1911. Similarly, when receiving data, antenna 1911 may collect radio signals which are then converted into digital data by radio front end circuitry 1912. The digital data may be passed to processing circuitry 1920. In other embodiments, the interface may comprise different components and/or different combinations of components.

Processing circuitry 1920 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1910 components, such as device readable medium 1930, WD 1910 functionality. Such functionality may include providing any of the various wireless features or benefits discussed herein. For example, processing circuitry 1920 may execute instructions stored in device readable medium 1930 or in memory within processing circuitry 1920 to provide the functionality disclosed herein.

As illustrated, processing circuitry 1920 includes one or more of RF transceiver circuitry 1922, baseband processing circuitry 1924, and application processing circuitry 1926. In other embodiments, the processing circuitry may comprise different components and/or different combinations of components. In certain embodiments processing circuitry 1920 of WD 1910 may comprise a SOC. In some embodiments, RF transceiver circuitry 1922, baseband processing circuitry 1924, and application processing circuitry 1926 may be on separate chips or sets of chips. In alternative embodiments, part or all of baseband processing circuitry 1924 and application processing circuitry 1926 may be combined into one chip or set of chips, and RF transceiver circuitry 1922 may be on a separate chip or set of chips. In still alternative embodiments, part or all of RF transceiver circuitry 1922 and baseband processing circuitry 1924 may be on the same chip or set of chips, and application processing circuitry 1926 may be on a separate chip or set of chips. In yet other alternative embodiments, part or all of RF transceiver circuitry 1922, baseband processing circuitry 1924, and application processing circuitry 1926 may be combined in the same chip or set of chips. In some embodiments, RF transceiver circuitry 1922 may be a part of interface 1914. RF transceiver circuitry 1922 may condition RF signals for processing circuitry 1920.

In certain embodiments, some or all of the functionality described herein as being performed by a WD may be provided by processing circuitry 1920 executing instructions stored on device readable medium 1930, which in certain embodiments may be a computer-readable storage medium. In alternative embodiments, some or all of the functionality may be provided by processing circuitry 1920 without executing instructions stored on a separate or discrete device readable storage medium, such as in a hard-wired manner. In any of those particular embodiments, whether executing instructions stored on a device readable storage medium or not, processing circuitry 1920 can be configured to perform the described functionality. The benefits provided by such functionality are not limited to processing circuitry 1920 alone or to other components of WD 1910, but are enjoyed by WD 1910 as a whole, and/or by end users and the wireless network generally.

Processing circuitry 1920 may be configured to perform any determining, calculating, or similar operations (e.g., certain obtaining operations) described herein as being performed by a WD. These operations, as performed by processing circuitry 1920, may include processing information obtained by processing circuitry 1920 by, for example, converting the obtained information into other information, comparing the obtained information or converted information to information stored by WD 1910, and/or performing one or more operations based on the obtained information or converted information, and as a result of said processing making a determination.

Device readable medium 1930 may be operable to store a computer program, software, an application including one or more of logic, rules, code, tables, etc. and/or other instructions capable of being executed by processing circuitry 1920. Device readable medium 1930 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1920. In some embodiments, processing circuitry 1920 and device readable medium 1930 may be considered to be integrated.

User interface equipment 1932 may provide components that allow for a human user to interact with WD 1910. Such interaction may be of many forms, such as visual, audial, tactile, etc. User interface equipment 1932 may be operable to produce output to the user and to allow the user to provide input to WD 1910. The type of interaction may vary depending on the type of user interface equipment 1932 installed in WD 1910. For example, if WD 1910 is a smart phone, the interaction may be via a touch screen; if WD 1910 is a smart meter, the interaction may be through a screen that provides usage (e.g., the number of gallons used) or a speaker that provides an audible alert (e.g., if smoke is detected). User interface equipment 1932 may include input interfaces, devices and circuits, and output interfaces, devices and circuits. User interface equipment 1932 is configured to allow input of information into WD 1910, and is connected to processing circuitry 1920 to allow processing circuitry 1920 to process the input information. User interface equipment 1932 may include, for example, a microphone, a proximity or other sensor, keys/buttons, a touch display, one or more cameras, a USB port, or other input circuitry. User interface equipment 1932 is also configured to allow output of information from WD 1910, and to allow processing circuitry 1920 to output information from WD 1910. User interface equipment 1932 may include, for example, a speaker, a display, vibrating circuitry, a USB port, a headphone interface, or other output circuitry. Using one or more input and output interfaces, devices, and circuits, of user interface equipment 1932, WD 1910 may communicate with end users and/or the wireless network, and allow them to benefit from the functionality described herein.

Auxiliary equipment 1934 is operable to provide more specific functionality which may not be generally performed by WDs. This may comprise specialized sensors for doing measurements for various purposes, interfaces for additional types of communication such as wired communications etc. The inclusion and type of components of auxiliary equipment 1934 may vary depending on the embodiment and/or scenario.

Power source 1936 may, in some embodiments, be in the form of a battery or battery pack. Other types of power sources, such as an external power source (e.g., an electricity outlet), photovoltaic devices or power cells, may also be used. WD 1910 may further comprise power circuitry 1937 for delivering power from power source 1936 to the various parts of WD 1910 which need power from power source 1936 to carry out any functionality described or indicated herein. Power circuitry 1937 may in certain embodiments comprise power management circuitry. Power circuitry 1937 may additionally or alternatively be operable to receive power from an external power source; in which case WD 1910 may be connectable to the external power source (such as an electricity outlet) via input circuitry or an interface such as an electrical power cable. Power circuitry 1937 may also in certain embodiments be operable to deliver power from an external power source to power source 1936. This may be, for example, for the charging of power source 1936. Power circuitry 1937 may perform any formatting, converting, or other modification to the power from power source 1936 to make the power suitable for the respective components of WD 1910 to which power is supplied.

Figure 20 illustrates a user Equipment in accordance with some embodiments.

Figure 20 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2000 may be any UE identified by the 3rd Generation Partnership Project (3GPP), including a NB-IoT UE, a machine type communication (MTC) UE, and/or an enhanced MTC (eMTC) UE. UE 2000, as illustrated in Figure 20, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 20 is a UE, the components discussed herein are equally applicable to a WD, and vice-versa.

In Figure 20, UE 2000 includes processing circuitry 2001 that is operatively coupled to input/output interface 2005, radio frequency (RF) interface 2009, network connection interface 2011, memory 2015 including random access memory (RAM) 2017, read-only memory (ROM) 2019, and storage medium 2021 or the like, communication subsystem 2031, power source 2013, and/or any other component, or any combination thereof. Storage medium 2021 includes operating system 2023, application program 2025, and data 2027. In other embodiments, storage medium 2021 may include other similar types of information. Certain UEs may utilize all of the components shown in Figure 20, or only a subset of the components. The level of integration between the components may vary from one UE to another UE. Further, certain UEs may contain multiple instances of a component, such as multiple processors, memories, transceivers, transmitters, receivers, etc.

In Figure 20, processing circuitry 2001 may be configured to process computer instructions and data. Processing circuitry 2001 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 2001 may include two central processing units (CPUs). Data may be information in a form suitable for use by a computer.

In the depicted embodiment, input/output interface 2005 may be configured to provide a communication interface to an input device, output device, or input and output device. UE 2000 may be configured to use an output device via input/output interface 2005. An output device may use the same type of interface port as an input device. For example, a USB port may be used to provide input to and output from UE 2000. The output device may be a speaker, a sound card, a video card, a display, a monitor, a printer, an actuator, an emitter, a smartcard, another output device, or any combination thereof. UE 2000 may be configured to use an input device via input/output interface 2005 to allow a user to capture information into UE 2000. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 20, RF interface 2009 may be configured to provide a communication interface to RF components such as a transmitter, a receiver, and an antenna. Network connection interface 2011 may be configured to provide a communication interface to network 2043a. Network 2043a may encompass wired and/or wireless networks such as a local-area network (LAN), a wide-area network (WAN), a computer network, a wireless network, a telecommunications network, another like network or any combination thereof. For example, network 2043a may comprise a Wi-Fi network. Network connection interface 2011 may be configured to include a receiver and a transmitter interface used to communicate with one or more other devices over a communication network according to one or more communication protocols, such as Ethernet, TCP/IP, SONET, ATM, or the like. Network connection interface 2011 may implement receiver and transmitter functionality appropriate to the communication network links (e.g., optical, electrical, and the like). The transmitter and receiver functions may share circuit components, software or firmware, or alternatively may be implemented separately.

RAM 2017 may be configured to interface via bus 2002 to processing circuitry 2001 to provide storage or caching of data or computer instructions during the execution of software programs such as the operating system, application programs, and device drivers. ROM 2019 may be configured to provide computer instructions or data to processing circuitry 2001. For example, ROM 2019 may be configured to store invariant low-level system code or data for basic system functions such as basic input and output (I/O), startup, or reception of keystrokes from a keyboard that are stored in a non-volatile memory. Storage medium 2021 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 2021 may be configured to include operating system 2023, application program 2025 such as a web browser application, a widget or gadget engine or another application, and data file 2027. Storage medium 2021 may store, for use by UE 2000, any of a variety of various operating systems or combinations of operating systems.

Storage medium 2021 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 2021 may allow UE 2000 to access computer-executable instructions, application programs or the like, stored on transitory or non-transitory memory media, to off-load data, or to upload data. An article of manufacture, such as one utilizing a communication system may be tangibly embodied in storage medium 2021, which may comprise a device readable medium.

In Figure 20, processing circuitry 2001 may be configured to communicate with network 2043b using communication subsystem 2031. Network 2043a and network 2043b may be the same network or networks or different network or networks. Communication subsystem 2031 may be configured to include one or more transceivers used to communicate with network 2043b. For example, communication subsystem 2031 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 2033 and/or receiver 2035 to implement transmitter or receiver functionality, respectively, appropriate to the RAN links (e.g., frequency allocations and the like). Further, transmitter 2033 and receiver 2035 of each transceiver may share circuit components, software or firmware, or alternatively may be implemented separately.

In the illustrated embodiment, the communication functions of communication subsystem 2031 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 2031 may include cellular communication, Wi-Fi communication, Bluetooth communication, and GPS communication. Network 2043b may encompass wired and/or wireless networks such as a local-area network (LAN), a wide-area network (WAN), a computer network, a wireless network, a telecommunications network, another like network or any combination thereof. For example, network 2043b may be a cellular network, a Wi-Fi network, and/or a near-field network. Power source 2013 may be configured to provide alternating current (AC) or direct current (DC) power to components of UE 2000.

The features, benefits and/or functions described herein may be implemented in one of the components of UE 2000 or partitioned across multiple components of UE 2000. Further, the features, benefits, and/or functions described herein may be implemented in any combination of hardware, software or firmware. In one example, communication subsystem 2031 may be configured to include any of the components described herein. Further, processing circuitry 2001 may be configured to communicate with any of such components over bus 2002. In another example, any of such components may be represented by program instructions stored in memory that when executed by processing circuitry 2001 perform the corresponding functions described herein. In another example, the functionality of any of such components may be partitioned between processing circuitry 2001 and communication subsystem 2031. In another example, the non-computationally intensive functions of any of such components may be implemented in software or firmware and the computationally intensive functions may be implemented in hardware.

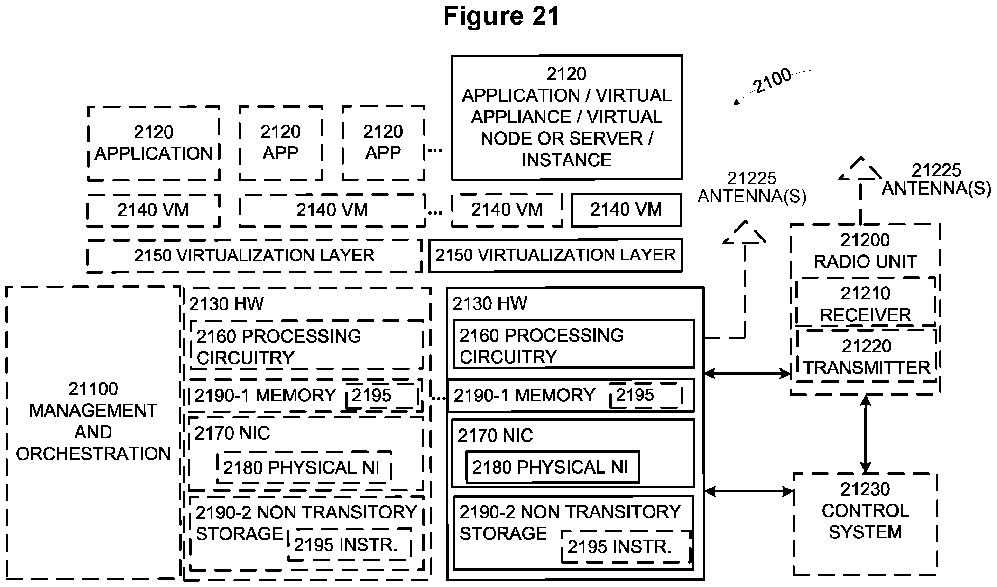

Figure 21 illustrates a virtualization environment in accordance with some embodiments.

Figure 21 is a schematic block diagram illustrating a virtualization environment 2100 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 2100 hosted by one or more of hardware nodes 2130. Further, in embodiments in which the virtual node is not a radio access node or does not require radio connectivity (e.g., a core network node), then the network node may be entirely virtualized.

The functions may be implemented by one or more applications 2120 (which may alternatively be called software instances, virtual appliances, network functions, virtual nodes, virtual network functions, etc.) operative to implement some of the features, functions, and/or benefits of some of the embodiments disclosed herein. Applications 2120 are run in virtualization environment 2100 which provides hardware 2130 comprising processing circuitry 2160 and memory 2190. Memory 2190 contains instructions 2195 executable by processing circuitry 2160 whereby application 2120 is operative to provide one or more of the features, benefits, and/or functions disclosed herein.

Virtualization environment 2100, comprises general-purpose or special-purpose network hardware devices 2130 comprising a set of one or more processors or processing circuitry 2160, which may be commercial off-the-shelf (COTS) processors, dedicated Application Specific Integrated Circuits (ASICs), or any other type of processing circuitry including digital or analog hardware components or special purpose processors. Each hardware device may comprise memory 2190-1 which may be non-persistent memory for temporarily storing instructions 2195 or software executed by processing circuitry 2160. Each hardware device may comprise one or more network interface controllers (NICs) 2170, also known as network interface cards, which include physical network interface 2180. Each hardware device may also include non-transitory, persistent, machine-readable storage media 2190-2 having stored therein software 2195 and/or instructions executable by processing circuitry 2160. Software 2195 may include any type of software including software for instantiating one or more virtualization layers 2150 (also referred to as hypervisors), software to execute virtual machines 2140 as well as software allowing it to execute functions, features and/or benefits described in relation with some embodiments described herein.

Virtual machines 2140 comprise virtual processing, virtual memory, virtual networking or interface and virtual storage, and may be run by a corresponding virtualization layer 2150 or hypervisor. Different embodiments of the instance of virtual appliance 2120 may be implemented on one or more of virtual machines 2140, and the implementations may be made in different ways.

During operation, processing circuitry 2160 executes software 2195 to instantiate the hypervisor or virtualization layer 2150, which may sometimes be referred to as a virtual machine monitor (VMM). Virtualization layer 2150 may present a virtual operating platform that appears like networking hardware to virtual machine 2140.

As shown in Figure 21, hardware 2130 may be a standalone network node with generic or specific components. Hardware 2130 may comprise antenna 21225 and may implement some functions via virtualization. Alternatively, hardware 2130 may be part of a larger cluster of hardware (e.g. such as in a data center or customer premise equipment (CPE)) where many hardware nodes work together and are managed via management and orchestration (MANO) 21100, which, among others, oversees lifecycle management of applications 2120.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 2140 may be a software implementation of a physical machine that runs programs as if they were executing on a physical, non-virtualized machine. Each of virtual machines 2140, and that part of hardware 2130 that executes that virtual machine, be it hardware dedicated to that virtual machine and/or hardware shared by that virtual machine with others of the virtual machines 2140, forms a separate virtual network elements (VNE).

Still in the context of NFV, Virtual Network Function (VNF) is responsible for handling specific network functions that run in one or more virtual machines 2140 on top of hardware networking infrastructure 2130 and corresponds to application 2120 in Figure 21.

In some embodiments, one or more radio units 21200 that each include one or more transmitters 21220 and one or more receivers 21210 may be coupled to one or more antennas 21225. Radio units 21200 may communicate directly with hardware nodes 2130 via one or more appropriate network interfaces and may be used in combination with the virtual components to provide a virtual node with radio capabilities, such as a radio access node or a base station.

In some embodiments, some signalling can be effected with the use of control system 21230 which may alternatively be used for communication between the hardware nodes 2130 and radio units 21200.

Figure 22 illustrates a telecommunication network connected via an intermediate network to a host computer in accordance with some embodiments.

With reference to Figure 22, in accordance with an embodiment, a communication system includes telecommunication network 2290, such as a 3GPP-type cellular network, which comprises access network 2291, such as a radio access network, and core network 4194. Access network 4191 comprises a plurality of base stations 2292A, 2292B, 2292C, such as NBs, eNBs, gNBs or other types of wireless access points, each defining a corresponding coverage area 2213A, 2213B, 2213C. Each base station 2212A, 2212B, 2212C is connectable to core network 2214 over a wired or wireless connection 2215. A first UE 2291 located in coverage area 2213C is configured to wirelessly connect to, or be paged by, the corresponding base station 2212C. A second UE 2292 in coverage area 2213A is wirelessly connectable to the corresponding base station 2212A. While a plurality of UEs 2291, 2292 are illustrated in this example, the disclosed embodiments are equally applicable to a situation where a sole UE is in the coverage area or where a sole UE is connecting to the corresponding base station 2212.

Telecommunication network 2210 is itself connected to host computer 2230, which may be embodied in the hardware and/or software of a standalone server, a cloud-implemented server, a distributed server or as processing resources in a server farm. Host computer 2230 may be under the ownership or control of a service provider, or may be operated by the service provider or on behalf of the service provider. Connections 2221 and 2222 between telecommunication network 2210 and host computer 2230 may extend directly from core network 2214 to host computer 2230 or may go via an optional intermediate network 2220. Intermediate network 2220 may be one of, or a combination of more than one of, a public, private or hosted network; intermediate network 2220, if any, may be a backbone network or the Internet; in particular, intermediate network 2220 may comprise two or more sub-networks (not shown).

The communication system of Figure 22 as a whole enables connectivity between the connected UEs 2291, 2292 and host computer 2230. The connectivity may be described as an over-the-top (OTT) connection 2250. Host computer 2230 and the connected UEs 2291, 2292 are configured to communicate data and/or signaling via OTT connection 2250, using access network 2211, core network 2214, any intermediate network 2220 and possible further infrastructure (not shown) as intermediaries. OTT connection 2250 may be transparent in the sense that the participating communication devices through which OTT connection 2250 passes are unaware of routing of uplink and downlink communications. For example, base station 2212 may not or need not be informed about the past routing of an incoming downlink communication with data originating from host computer 2230 to be forwarded (e.g., handed over) to a connected UE 2291. Similarly, base station 2212 need not be aware of the future routing of an outgoing uplink communication originating from the UE 2291 towards the host computer 2230.

Figure 23 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 23. In communication system 2300, host computer 2310 comprises hardware 2315 including communication interface 2316 configured to set up and maintain a wired or wireless connection with an interface of a different communication device of communication system 2300. Host computer 2310 further comprises processing circuitry 2318, which may have storage and/or processing capabilities. In particular, processing circuitry 2318 may comprise one or more programmable processors, application-specific integrated circuits, field programmable gate arrays or combinations of these (not shown) adapted to execute instructions. Host computer 2310 further comprises software 2311, which is stored in or accessible by host computer 2310 and executable by processing circuitry 2318. Software 2311 includes host application 2312. Host application 2312 may be operable to provide a service to a remote user, such as UE 2330 connecting via OTT connection 2350 terminating at UE 2330 and host computer 2310. In providing the service to the remote user, host application 2312 may provide user data which is transmitted using OTT connection 2350.

Communication system 2300 further includes base station 2320 provided in a telecommunication system and comprising hardware 2325 enabling it to communicate with host computer 2310 and with UE 2330. Hardware 2325 may include communication interface 2326 for setting up and maintaining a wired or wireless connection with an interface of a different communication device of communication system 2300, as well as radio interface 2327 for setting up and maintaining at least wireless connection 2370 with UE 2330 located in a coverage area (not shown in Figure 23) served by base station 2320. Communication interface 2326 may be configured to facilitate connection 2360 to host computer 2310. Connection 2360 may be direct or it may pass through a core network (not shown in Figure 23) of the telecommunication system and/or through one or more intermediate networks outside the telecommunication system. In the embodiment shown, hardware 2325 of base station 2320 further includes processing circuitry 2328, which may comprise one or more programmable processors, application-specific integrated circuits, field programmable gate arrays or combinations of these (not shown) adapted to execute instructions. Base station 2320 further has software 2321 stored internally or accessible via an external connection.

Communication system 2300 further includes UE 2330 already referred to. Its hardware 2335 may include radio interface 2337 configured to set up and maintain wireless connection 2370 with a base station serving a coverage area in which UE 2330 is currently located. Hardware 2335 of UE 2330 further includes processing circuitry 2338, which may comprise one or more programmable processors, application-specific integrated circuits, field programmable gate arrays or combinations of these (not shown) adapted to execute instructions. UE 2330 further comprises software 2331, which is stored in or accessible by UE 2330 and executable by processing circuitry 2338. Software 2331 includes client application 2332. Client application 2332 may be operable to provide a service to a human or non-human user via UE 2330, with the support of host computer 2310. In host computer 2310, an executing host application 2312 may communicate with the executing client application 2332 via OTT connection 2350 terminating at UE 2330 and host computer 2310. In providing the service to the user, client application 2332 may receive request data from host application 2312 and provide user data in response to the request data. OTT connection 2350 may transfer both the request data and the user data. Client application 2332 may interact with the user to generate the user data that it provides.

It is noted that host computer 2310, base station 2320 and UE 2330 illustrated in Figure 23 may be similar or identical to host computer 2230, one of base stations 2212A, 2212B, 2212C and one of UEs 2291, 2292 of Figure 22, respectively. This is to say, the inner workings of these entities may be as shown in Figure 23 and independently, the surrounding network topology may be that of Figure 22.

In Figure 23, OTT connection 2350 has been drawn abstractly to illustrate the communication between host computer 2310 and UE 2330 via base station 2320, without explicit reference to any intermediary devices and the precise routing of messages via these devices. Network infrastructure may determine the routing, which it may be configured to hide from UE 2330 or from the service provider operating host computer 2310, or both. While OTT connection 2350 is active, the network infrastructure may further take decisions by which it dynamically changes the routing (e.g., on the basis of load balancing consideration or reconfiguration of the network).

Wireless connection 2370 between UE 2330 and base station 2320 is in accordance with the teachings of the embodiments described throughout this disclosure. One or more of the various embodiments may improve the performance of OTT services provided to UE 2330 using OTT connection 2350, in which wireless connection 2370 forms the last segment. More precisely, the teachings of these embodiments may improve the random access speed and/or reduce random access failure rates and thereby provide benefits such as faster and/or more reliable random access.

A measurement procedure may be provided for the purpose of monitoring data rate, latency and other factors on which the one or more embodiments improve. There may further be an optional network functionality for reconfiguring OTT connection 2350 between host computer 2310 and UE 2330, in response to variations in the measurement results. The measurement procedure and/or the network functionality for reconfiguring OTT connection 2350 may be implemented in software 2311 and hardware 2315 of host computer 2310 or in software 2331 and hardware 2335 of UE 2330, or both. In embodiments, sensors (not shown) may be deployed in or in association with communication devices through which OTT connection 2350 passes; the sensors may participate in the measurement procedure by supplying values of the monitored quantities exemplified above, or supplying values of other physical quantities from which software 2311, 2331 may compute or estimate the monitored quantities. The reconfiguring of OTT connection 2350 may include message format, retransmission settings, preferred routing etc.; the reconfiguring need not affect base station 2320, and it may be unknown or imperceptible to base station 2320. Such procedures and functionalities may be known and practiced in the art. In certain embodiments, measurements may involve proprietary UE signaling facilitating host computer 2310's measurements of throughput, propagation times, latency and the like. The measurements may be implemented in that software 2311 and 2331 causes messages to be transmitted, in particular empty or 'dummy' messages, using OTT connection 2350 while it monitors propagation times, errors etc.

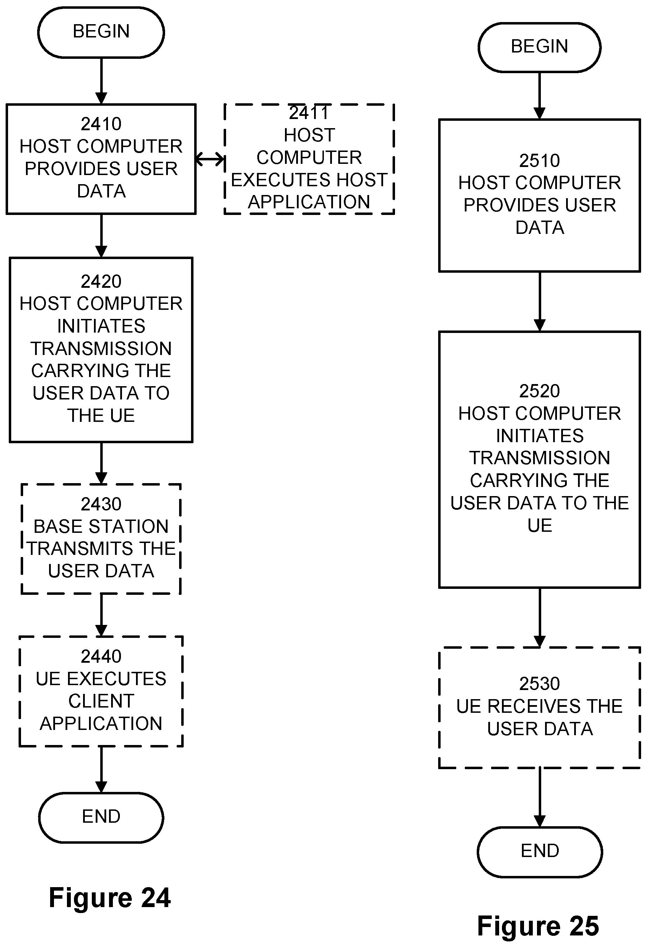

Figure 24 illustrates methods implemented in a communication system including a host computer, a base station and a user equipment in accordance with some embodiments.

Figure 24 is a flowchart illustrating a method implemented in a communication system, in accordance with one embodiment. The communication system includes a host computer, a base station and a UE which may be those described with reference to Figures 22 and 23. For simplicity of the present disclosure, only drawing references to Figure 24 will be included in this section. In step 2410, the host computer provides user data. In substep 2411 (which may be optional) of step 2410, the host computer provides the user data by executing a host application. In step 2420, the host computer initiates a transmission carrying the user data to the UE. In step 2430 (which may be optional), the base station transmits to the UE the user data which was carried in the transmission that the host computer initiated, in accordance with the teachings of the embodiments described throughout this disclosure. In step 2440 (which may also be optional), the UE executes a client application associated with the host application executed by the host computer.

Figure 25 illustrates methods implemented in a communication system including a host computer, a base station and a user equipment in accordance with some embodiments.

Figure 25 is a flowchart illustrating a method implemented in a communication system, in accordance with one embodiment. The communication system includes a host computer, a base station and a UE which may be those described with reference to Figures 22 and 23. For simplicity of the present disclosure, only drawing references to Figure 25 will be included in this section. In step 2510 of the method, the host computer provides user data. In an optional substep (not shown) the host computer provides the user data by executing a host application. In step 2520, the host computer initiates a transmission carrying the user data to the UE. The transmission may pass via the base station, in accordance with the teachings of the embodiments described throughout this disclosure. In step 2530 (which may be optional), the UE receives the user data carried in the transmission.

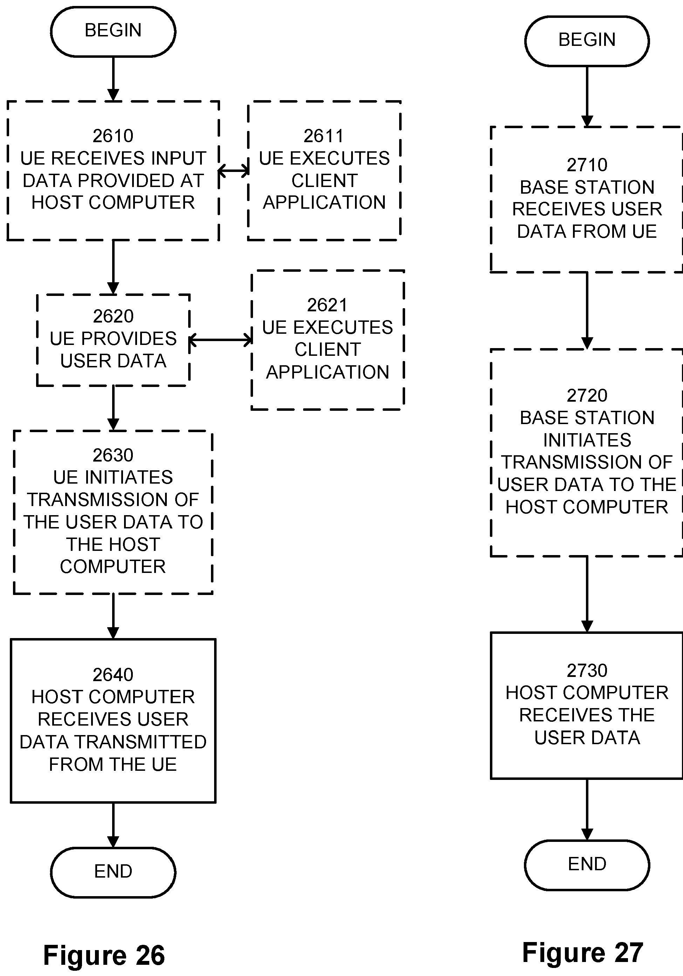

Figure 26 illustrates methods implemented in a communication system including a host computer, a base station and a user equipment in accordance with some embodiments

Figure 26 is a flowchart illustrating a method implemented in a communication system, in accordance with one embodiment. The communication system includes a host computer, a base station and a UE which may be those described with reference to Figures 22 and 23. For simplicity of the present disclosure, only drawing references to Figure 26 will be included in this section. In step 2610 (which may be optional), the UE receives input data provided by the host computer. Additionally or alternatively, in step 2620, the UE provides user data. In substep 2621 (which may be optional) of step 2620, the UE provides the user data by executing a client application. In substep 2611 (which may be optional) of step 2610, the UE executes a client application which provides the user data in reaction to the received input data provided by the host computer. In providing the user data, the executed client application may further consider user input received from the user. Regardless of the specific manner in which the user data was provided, the UE initiates, in substep 2630 (which may be optional), transmission of the user data to the host computer. In step 2640 of the method, the host computer receives the user data transmitted from the UE, in accordance with the teachings of the embodiments described throughout this disclosure.

Figure 27 illustrates methods implemented in a communication system including a host computer, a base station and a user equipment in accordance with some embodiments

Figure 27 is a flowchart illustrating a method implemented in a communication system, in accordance with one embodiment. The communication system includes a host computer, a base station and a UE which may be those described with reference to Figures 22 and 23. For simplicity of the present disclosure, only drawing references to Figure 27 will be included in this section. In step 2710 (which may be optional), in accordance with the teachings of the embodiments described throughout this disclosure, the base station receives user data from the UE. In step 2720 (which may be optional), the base station initiates transmission of the received user data to the host computer. In step 2730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

## Claims

1. A method of operating a user equipment, UE, (100, 1910, 2000, 2291, 2291, 2330) comprising:
storing (1102) mobility history information, MHI, independent of a radio resource control, RRC, state, wherein the MHI includes a cell identifier that is a serving cell and time information corresponding to how long the UE has stayed in the serving cell;
logging (1104) public land mobile network, PLMN,-specific MHI into the UE, wherein logging the PLMN-specific MHI into the UE comprises logging (1202) PLMN identify information for each cell that has been visited by the UE;
reporting (1106) at least a portion of the MHI to a network node, the reporting comprising one of:
sending to the network node only the MHI that is related to the PLMN identity information of a cell that requests the MHI; and
deleting content of the MHI associated to that PLMN from a VarMobilityHistoryReport variable; or
determining the at least portion of the MHI that is logged as MHI based on and/or sent to network nodes is based on a master node PLMN or based on a secondary node PLMN.

2. The method of Claim 1, wherein logging PLMN identity information for each cell that has been visited by the UE comprises first logging (1302) a first plurality of cells that correspond to a first PLMN and then logging a second plurality of cells that correspond to a second PLMN that is different from the first PLMN.

3. The method of Claim 2, wherein first logging the first plurality of cells and then logging the second plurality of cells comprises generating (1304) a list of lists of MHI.

4. The method of Claim 1, wherein logging PLMN identity information for each cell that has been visited by the UE comprises logging (1402) PLMN identity information beside corresponding visited cell information in a list of visited cells.

5. The method of Claim 4, wherein logging PLMN identity information beside corresponding visited cell information in a list of visited cells comprises generating (1404) a single list of MHI.

6. The method of Claim 1, wherein logging PLMN identity information for each cell that has been visited by the UE comprises logging (1502) the PLMN identity information of a visited cell as a part of an existing MHI responsive to the PLMN identity information of the visited cell being included in the PLMN identity information that is in an existing mobility history information variable of the MHI.

7. The method of Claim 6, wherein, responsive to the registered PLMN, RPLMN, being part of the PLMN identity information stored in a UE variable varMobilityHistoryReport, the UE is further configured to append (1504) the cell to the visitedCellInfoList.

8. A user equipment, UE, (100, 1910, 2000, 2291, 2291, 2330) adapted to perform according to any of Claims 1-7.

## Patentansprüche

1. Verfahren zum Betreiben einer Benutzereinrichtung, UE, (100, 1910, 2000, 2291, 2291, 2330), umfassend:
Speichern (1102) von Mobilitätsverlaufsinformationen, MHI, unabhängig von einem Funkressourcensteuerungszustand, RRC-Zustand, wobei die MHI eine Kennung einer Zelle, die eine bedienende Zelle ist, und Zeitinformationen umfassen, die der Dauer entsprechen, die die UE in der bedienenden Zelle geblieben ist;
Protokollieren (1104) von für ein öffentliches Landfunknetzwerk, PLMN, spezifischen MHI in der UE, wobei das Protokollieren der PLMN-spezifischen MHI in der UE Protokollieren (1202) von PLMN-Identitätsinformationen für jede Zelle umfasst, die von der UE besucht wurde;
Melden (1106) mindestens eines Teils der MHI an einen Netzwerkknoten, wobei das Melden eines von Folgendem umfasst:
Senden nur der MHI an den Netzwerkknoten, die mit den PLMN-Identitätsinformationen einer Zelle in Beziehung stehen, die die MHI anfordert; und
Löschen von Inhalt der mit diesem PLMN assoziierten MHI aus einer VarMobilityHistoryReport-Variablen; oder
Bestimmen, dass der mindestens eine Teil der MHI, der als MHI protokolliert und/oder an Netzwerkknoten gesendet wird, auf einem PLMN eines Masterknotens basiert oder einem PLMN eines sekundären Knotens basiert.

2. Verfahren nach Anspruch 1, wobei das Protokollieren von PLMN-Identitätsinformationen für jede Zelle, die von der UE besucht wurde, erstes Protokollieren (1302) einer ersten Mehrzahl von Zellen, die einem ersten PLMN entsprechen, und anschließendes Protokollieren einer zweiten Mehrzahl von Zellen umfasst, die einem zweiten PLMN entsprechen, das sich von dem ersten PLMN unterscheidet.

3. Verfahren nach Anspruch 2, wobei das erste Protokollieren der ersten Mehrzahl von Zellen und das anschließende Protokollieren der zweiten Mehrzahl von Zellen Erzeugen (1304) einer Liste von MHI-Listen umfassen.

4. Verfahren nach Anspruch 1, wobei das Protokollieren von PLMN-Identitätsinformationen für jede Zelle, die von der UE besucht wurde, Protokollieren (1402) von PLMN-Identitätsinformationen neben entsprechenden Informationen zu besuchten Zellen in einer Liste besuchter Zellen umfasst.

5. Verfahren nach Anspruch 4, wobei das Protokollieren von PLMN-Identitätsinformationen neben entsprechenden Informationen zu besuchten Zellen in einer Liste besuchter Zellen Erzeugen (1404) einer einzigen MHI-Liste umfasst.

6. Verfahren nach Anspruch 1, wobei das Protokollieren von PLMN-Identitätsinformationen für jede Zelle, die von der UE besucht wurde, Protokollieren (1502) der PLMN-Identitätsinformationen einer besuchten Zelle als Teil von bestehenden MHI in Reaktion darauf umfasst, dass die PLMN-Identitätsinformationen der besuchten Zelle in die PLMN-Identitätsinformationen aufgenommen werden, die sich in einer bestehenden Mobilitätsverlaufsinformationsvariablen der MHI befinden.

7. Verfahren nach Anspruch 6, wobei die UE in Reaktion darauf, dass das registrierte PLMN, RPLMN, Teil der PLMN-Identitätsinformationen ist, die in einer UE-Variablen varMobilityHistoryReport gespeichert sind, ferner dazu konfiguriert ist, die Zelle an die visitedCellinfoList anzuhängen (1504).

8. Benutzereinrichtung, UE, (100, 1910, 2000, 2291, 2291, 2330), die zum Durchführen nach einem der Ansprüche 1-7 ausgelegt ist.

## Revendications

1. Procédé de fonctionnement d'un équipement utilisateur, UE, (100, 1910, 2000, 2291, 2291, 2330) comprenant :
le stockage (1102) d'informations d'historique de mobilité, MHI, indépendantes d'un état de commande de ressources radio, RRC, dans lequel les MHI incluent un identifiant de cellule qui identifie une cellule de desserte et des informations de temps correspondant à la durée pendant laquelle l'UE est resté dans la cellule de desserte ;
la journalisation (1104) de MHI spécifiques à un réseau mobile terrestre public, PLMN, dans l'UE, dans lequel la journalisation des MHI spécifiques au PLMN dans l'UE comprend la journalisation (1202) d'informations d'identité de PLMN pour chaque cellule qui a été visitée par l'UE ;
le rapport (1106) d'au moins une partie des MHI à un nœud de réseau, le rapport comprenant l'un parmi :
l'envoi, au nœud de réseau, uniquement des MHI qui sont liées aux informations d'identité de PLMN d'une cellule qui demande les MHI ; et
la suppression d'un contenu des MHI associées à ce PLMN à partir d'une variable VarMobilityHistoryReport ; ou
la détermination de l'au moins une partie des MHI qui est journalisée en tant que MHI sur la base de et/ou envoyée à des nœuds de réseau sur la base d'un PLMN de nœud maître ou sur la base d'un PLMN de nœud secondaire.

2. Procédé selon la revendication 1, dans lequel la journalisation d'informations d'identité de PLMN pour chaque cellule qui a été visitée par l'UE comprend d'abord la journalisation (1302) d'une première pluralité de cellules qui correspondent à un premier PLMN puis la journalisation d'une deuxième pluralité de cellules qui correspondent à un deuxième PLMN qui est différent du premier PLMN.

3. Procédé selon la revendication 2, dans lequel d'abord la journalisation de la première pluralité de cellules puis la journalisation de la deuxième pluralité de cellules comprennent la génération (1304) d'une liste de listes de MHI.

4. Procédé selon la revendication 1, dans lequel la journalisation d'informations d'identité de PLMN pour chaque cellule qui a été visitée par l'UE comprend la journalisation (1402) d'informations d'identité de PLMN en plus d'informations de cellules visitées correspondantes dans une liste de cellules visitées.

5. Procédé selon la revendication 4, dans lequel la journalisation d'informations d'identité de PLMN en plus d'informations de cellules visitées correspondantes dans une liste de cellules visitées comprend la génération (1404) d'une liste unique de MHI.

6. Procédé selon la revendication 1, dans lequel la journalisation d'informations d'identité de PLMN pour chaque cellule qui a été visitée par l'UE comprend la journalisation (1502) des informations d'identité de PLMN d'une cellule visitée dans le cadre de MHI existantes en réponse au fait que les informations d'identité de PLMN de la cellule visitée sont incluses dans les informations d'identité de PLMN qui sont dans une variable d'informations d'historique de mobilité existante des MHI.

7. Procédé selon la revendication 6, dans lequel, en réponse au fait que le PLMN enregistré, RPLMN, fait partie des informations d'identité de PLMN stockées dans une variable d'UE varMobilityHistoruReport, l'UE est en outre configuré pour ajouter (1504) la cellule à la visitedCellInfoList.

8. Equipement utilisateur, UE, (100, 1910, 2000, 2291, 2291, 2330) adapté pour fonctionner selon l'une quelconque des revendications 1 à 7.
